# EUROPEAN PATENT APPLICATION

(11) **EP 4 607 051 A1**
(43) Date of publication of application: **27.08.2025**
(21) Application number: 23879829.2
(22) Date of filing: 18.10.2023
(51) Int. Cl.: F16D 13/52, F16D 43/12, F16D 43/21

(54) **POWER TRANSMISSION DEVICE**

(30) Priority: 20.10.2022 JP 2022168647
(71) Applicant: Kabushiki Kaisha F.C.C., Hamamatsu-shi, Shizuoka 431-1394 (JP)
(72) Inventor: KONDO Hiroyuki, Hamamatsu-shi, Shizuoka 431-1394 (JP); OZAWA Yoshihiko, Hamamatsu-shi, Shizuoka 431-1394 (JP); CHEN Han Hiong, Hamamatsu-shi, Shizuoka 431-1394 (JP); SHIMIZU Ryota, Hamamatsu-shi, Shizuoka 431-1394 (JP)
(74) Representative: Grünecker Patent- und Rechtsanwälte PartG mbB
(86) International application number: PCT/JP2023/037702
(87) International publication number: WO 2024/085186

(57) **Abstract**

A power transmission apparatus K includes: a clutch member 4 holding driven clutch plates 7; a pressure member 5 that is able to push driving clutch plates 6 and the driven clutch plates 7 together with the clutch member 4; a centrifugal clutch means 9 to apply a first pressing force to the driving clutch plates 6 and the driven clutch plates 7 upon movement of a weight member 10 from an inner diameter position to an outer diameter position, and to press the driving clutch plates 6 and the driven clutch plates 7 against each other such that a driving force of an engine E is transmittable to a driving wheel W when the weight member 10 is located at the outer diameter position; a pressing force amplifying mechanism 20 to generate, upon an increase in rotational speed of the engine E, a second pressing force for amplifying the pressing force applied to the driving clutch plates 6 and the driven clutch plates 7; and an assist cam mechanism 30 to generate, upon rotation of the clutch member 4 relative to the pressure member 5, a third pressing force for amplifying the pressing force applied to the driving clutch plates 6 and the driven clutch plates 7.

## Description

### TECHNICAL FIELD

The present invention relates to power transmission apparatuses each of which is able to freely transmit a rotational force of an input member to an output member or cut off the rotational force.

### BACKGROUND ART

As disclosed in Patent Literature 1, for example, a centrifugal clutch means devised in the form of a power transmission apparatus known in the art includes a weight member that moves from an inner diameter position to an outer diameter position with centrifugal force resulting from rotation of a clutch housing and is thus able to press driving and driven clutch plates against each other. The power transmission apparatus known in the art involves rotating the clutch housing by activating a driving source, such as an engine, and is thus able to apply centrifugal force to the weight member so as to press the driving and driven clutch plates against each other, enabling transmission of a driving force of the engine to a wheel.

The power transmission apparatus known in the art is provided with a pressing force amplifying mechanism to, when a rotational force input to an input member is transmittable to an output member, generate cam thrust for amplifying a pressing force applied to the driving and driven clutch plates. This reduces an operating force required for a driver's clutch operation to press the driving and driven clutch plates against each other, enabling smooth power transmission.

### CITATION LIST

### PATENT LITERATURE

[Patent Literature 1] WO 2013/183588

### SUMMARY OF INVENTION

### TECHNICAL PROBLEM

The power transmission apparatus known in the art involves amplifying the pressing force applied to the driving and driven clutch plates by the pressing force amplifying mechanism in order to transmit the driving force of the engine to the wheel. If the pressing force applied to the driving and driven clutch plates is further increased, however, the driving force of the engine will be more efficiently transmitted to the wheel.

The present invention has been made in view of these points, and its object is to provide power transmission apparatuses each of which is able to more efficiently transmit a driving force of a driving source to a wheel.

### SOLUTION TO PROBLEM

A power transmission apparatus according to the present invention includes: a clutch member housed in a clutch housing that rotates together with an input member to be rotated with a driving force of a driving source and that holds driving clutch plates, the clutch member being connected to an output member that is able to rotate a wheel, the clutch member holding driven clutch plates disposed alternately with the driving clutch plates; a pressure member that is able to push the driving clutch plates and the driven clutch plates together with the clutch member; a centrifugal clutch means including a weight member movable from an inner diameter position to an outer diameter position with centrifugal force resulting from rotation of the clutch housing, the centrifugal clutch means applying a first pressing force to the driving clutch plates and the driven clutch plates upon movement of the weight member from the inner diameter position to the outer diameter position, the centrifugal clutch means pressing the driving clutch plates and the driven clutch plates against each other such that the driving force of the driving source is transmittable to the wheel when the weight member is located at the outer diameter position, the centrifugal clutch means releasing the first pressing force applied to the driving clutch plates and the driven clutch plates so as to be able to cut off transmission of the driving force of the driving source to the wheel when the weight member is located at the inner diameter position; a pressing force amplifying mechanism to generate, upon an increase in rotational speed of the driving source, a second pressing force for amplifying the pressing force applied to the driving clutch plates and the driven clutch plates; and an assist cam mechanism to generate, upon rotation of the clutch member relative to the pressure member, a third pressing force for amplifying the pressing force applied to the driving clutch plates and the driven clutch plates.

The power transmission apparatus according to the present invention includes not only the centrifugal clutch means to apply the first pressing force and the pressing force amplifying mechanism to generate the second pressing force, but also the assist cam mechanism to generate, upon rotation of the clutch member relative to the pressure member, the third pressing force for amplifying the pressing force applied to the driving clutch plates and the driven clutch plates. In the above-described embodiment, not only the first pressing force and the second pressing force but also the third pressing force is applied to the driving clutch plates and the driven clutch plates in response to a vehicle driving condition, making it possible to maximize the pressing force applied to the driving clutch plates and the driven clutch plates. This enables the driving force of the driving source to be more efficiently transmitted to the wheel.

### EFFECTS OF INVENTION

The present invention is able to provide power transmission apparatuses each of which is capable of more efficiently transmitting a driving force of a driving source to a wheel.

### BRIEF DESCRIPTION OF DRAWINGS

FIG. 1 is an external view of a power transmission apparatus according to a first embodiment.
FIG 2 is a cross-sectional view taken along the line II-II of FIG 1.
FIG 3 is a cross-sectional view taken along the line III-III of FIG. 1.
FIG 4 is a perspective view of a clutch housing according to the first embodiment.
FIG 5A is a plan view of a clutch member according to the first embodiment.
FIG 5B is an exploded perspective view of the clutch member according to the first embodiment.
FIG 6 is a three-view drawing of a first clutch member according to the first embodiment.
FIG 7 is a perspective view of the first clutch member according to the first embodiment.
FIG 8 is a three-view drawing of a second clutch member according to the first embodiment.
FIG 9 is a cross-sectional view taken along the line IX-IX of FIG. 8.
FIG 10 is a three-view drawing of a pressure member according to the first embodiment.
FIG 11 is a three-view drawing of a centrifugal clutch means according to the first embodiment.
FIG 12 is a cross-sectional view taken along the line XII-XII of FIG 11.
FIG 13 is a perspective view of the centrifugal clutch means according to the first embodiment.
FIG 14 is a schematic diagram illustrating a vehicle in which the power transmission apparatus according to the first embodiment is used.
FIG. 15 is a cross-sectional view illustrating a state in which each weight member of the centrifugal clutch means according to the first embodiment has started moving from an inner diameter position toward an outer diameter position (i.e., a state in which a restraint imposed by a restraining means has been lifted).
FIG. 16 is a cross-sectional view illustrating the process of movement of each weight member of the centrifugal clutch means according to the first embodiment from the inner diameter position toward the outer diameter position (during which amplifying cams are in operation).
FIG. 17 is a cross-sectional view illustrating a state in which each weight member of the centrifugal clutch means according to the first embodiment has reached the outer diameter position.
FIG. 18 is a schematic diagram illustrating a state in which the amplifying cams according to the first embodiment are restrained from operating.
FIG. 19 is a schematic diagram illustrating a state in which a restraint imposed on operation of the amplifying cams according to the first embodiment has been lifted.
FIG. 20 is a schematic diagram illustrating a state in which the amplifying cams according to the first embodiment are in operation.
FIG. 21 is a schematic diagram illustrating a state in which the amplifying cams according to the first embodiment have finished operating.
FIG. 22 is a schematic diagram illustrating a state in which back torque limiter cams according to the first embodiment are in operation.
FIG. 23 is an external view of a power transmission apparatus according to a second embodiment.
FIG. 24 is a cross-sectional view taken along the line XXIV-XXIV of FIG. 23.
FIG. 25 is an exploded perspective view of first and second clutch members according to the second embodiment.
FIG. 26 is another exploded perspective view of the first and second clutch members according to the second embodiment.
FIG. 27 is a three-view drawing of the first clutch member according to the second embodiment.
FIG. 28 is a cross-sectional view illustrating a state in which each weight member of a centrifugal clutch means according to the second embodiment has started moving from an inner diameter position toward an outer diameter position (i.e., a state in which a restraint imposed by a restraining means has been lifted).
FIG. 29 is a cross-sectional view illustrating the process of movement of each weight member of the centrifugal clutch means according to the second embodiment from the inner diameter position toward the outer diameter position (during which amplifying cams are in operation).
FIG. 30 is a cross-sectional view illustrating a state in which each weight member of the centrifugal clutch means according to the second embodiment has reached the outer diameter position.
FIG 31 is a graph illustrating relationships between engine rotational speeds and components.
FIG. 32 is a plan view of a clutch member according to a third embodiment.

### DESCRIPTION OF EMBODIMENTS

### First Embodiment

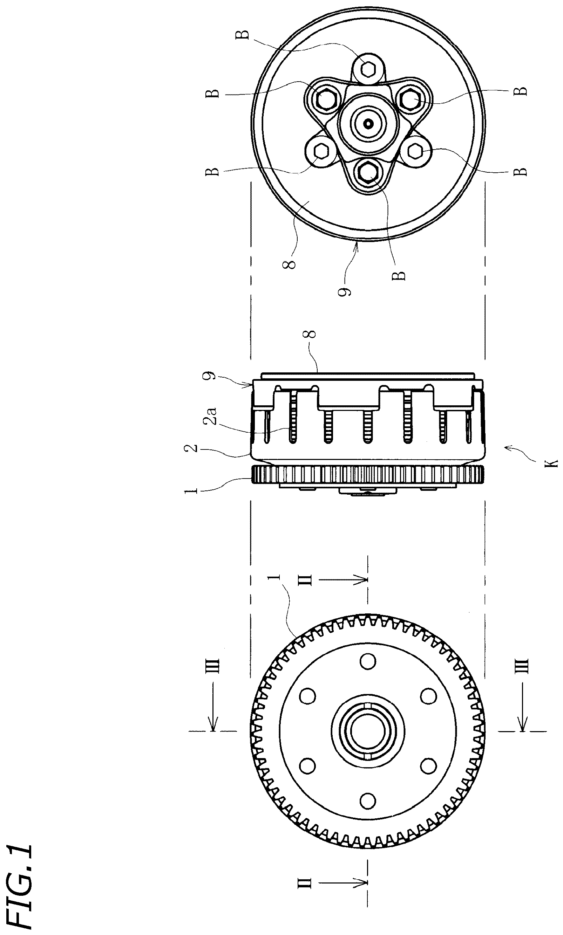

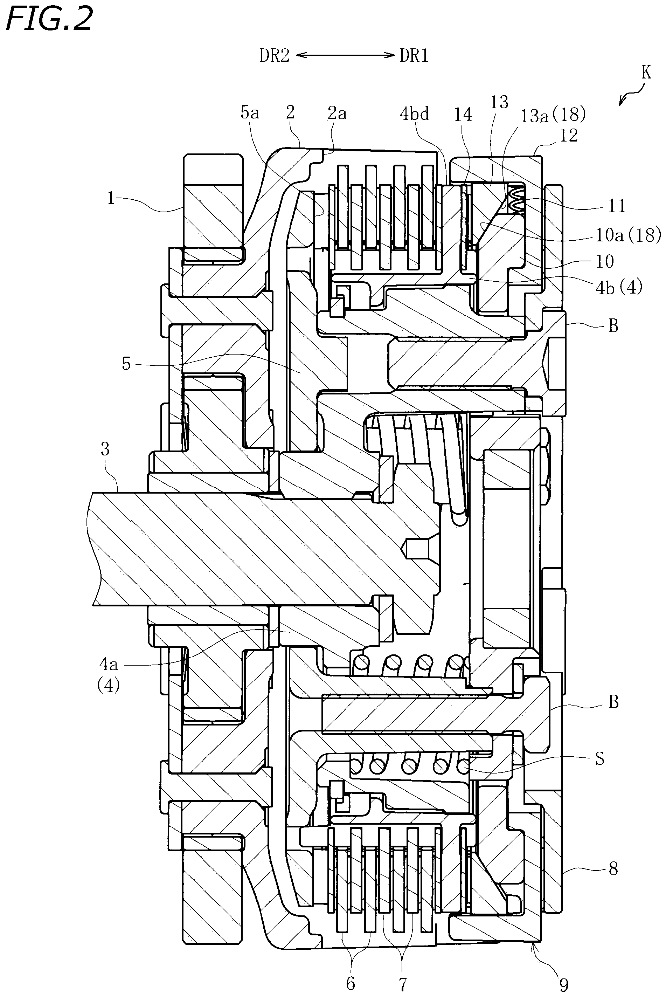

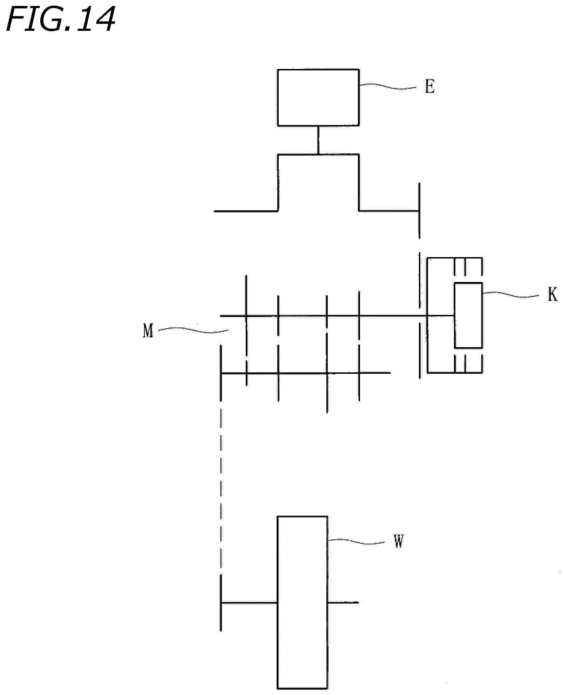

Embodiments of the present invention will be described in detail below with reference to the drawings. As illustrated in FIG. 14, a power transmission apparatus K is disposed on a vehicle so as to freely transmit a driving force of an engine E to a driving wheel W through a transmission M or cut off the driving force. The engine E is an example of a driving source. The driving wheel W is an example of a wheel. As illustrated in FIGS. 1 to 13, the power transmission apparatus K includes: a clutch housing 2 provided with an input gear 1 to be rotated with the driving force of the engine E installed on the vehicle; an output shaft 3 connected to the transmission M; a clutch member 4; a pressure member 5; driving clutch plates 6 and driven clutch plates 7 assembled in a stacked arrangement; and a centrifugal clutch means 9 including weight members 10. The reference sign S in the drawings represents a clutch spring. The clutch spring S urges the pressure member 5 in a direction toward the clutch member 4 (i.e., a direction indicated by an arrow DR1 in FIG. 2). The input gear 1 is an example of an input member. The output shaft 3 is an example of an output member.

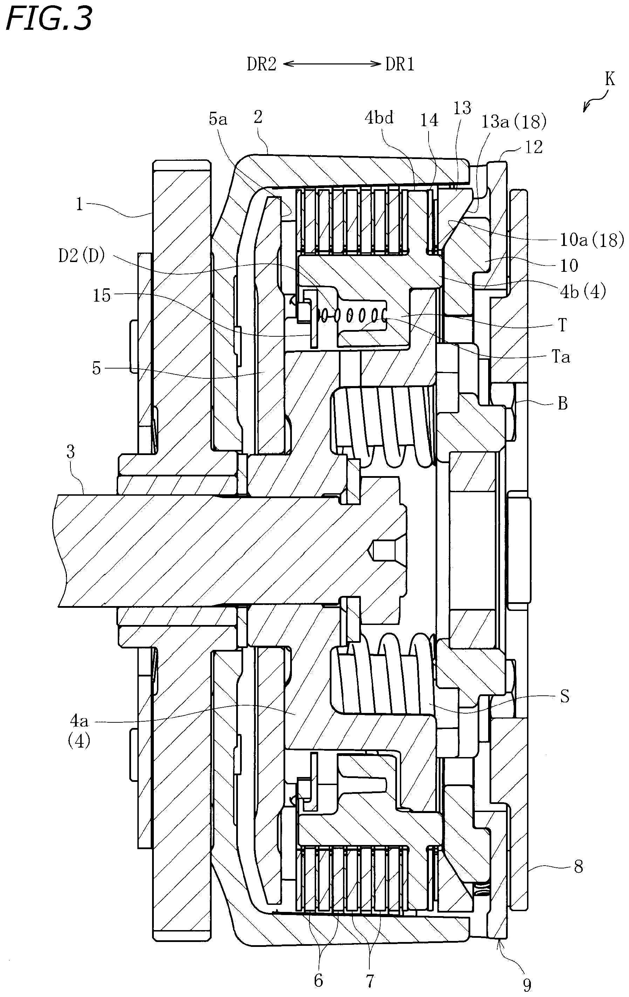

The input gear 1 is configured to be rotatable around the output shaft 3 upon receiving the driving force (or rotational force) transmitted from the engine E. The input gear 1 is connected to the clutch housing 2 with a fastener, such as a rivet. The clutch housing 2 has a cylindrical shape with an opening defined at its right end in FIGS. 2 and 3. The clutch housing 2 is rotated together with the input gear 1 by the driving force of the engine E.

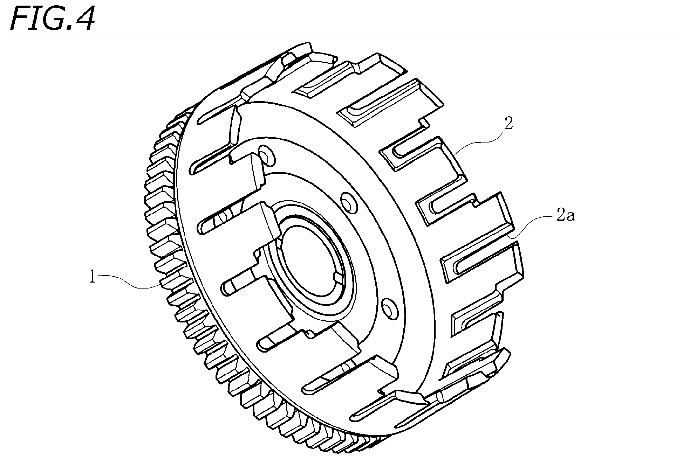

As illustrated in FIG. 4, the clutch housing 2 is circumferentially provided with cut-outs 2a. The driving clutch plates 6 are fitted to the cut-outs 2a so as to be attached to the clutch housing 2. In other words, the clutch housing 2 holds the driving clutch plates 6. The driving clutch plates 6 are each made of a substantially annular plate material. The driving clutch plates 6 are configured to rotate together with rotation of the clutch housing 2 and to be movable in an axial direction of the output shaft 3 (i.e., a right-left direction in FIGS. 2 and 3).

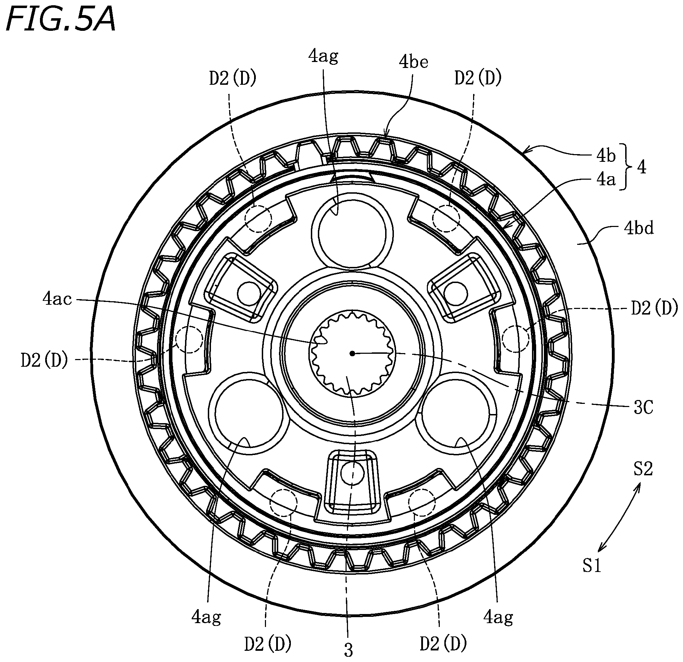

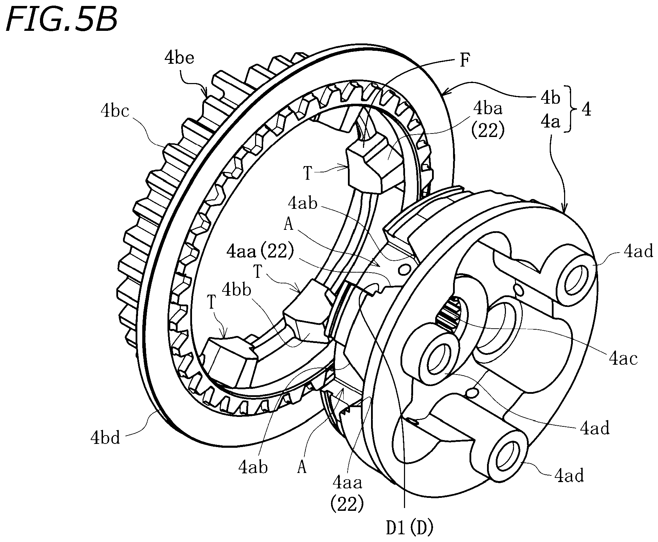

As illustrated in FIG. 2, the clutch member 4 is housed in the clutch housing 2. The clutch member 4 holds the driven clutch plates 7 arranged alternately with the driving clutch plates 6. The clutch member 4 is connected to the output shaft 3 that is able to rotate the driving wheel W through the transmission M of the vehicle. As illustrated in FIGS. 5A and 5B, the clutch member 4 includes a first clutch member 4a and a second clutch member 4b. The first clutch member 4a is fitted to the second clutch member 4b.

As illustrated in FIGS. 5A to 7, the first clutch member 4a includes a centrally defined insertion hole 4ac. The insertion hole 4ac has the output shaft 3 inserted therethrough such that a gear provided in the insertion hole 4ac and a gear provided on the output shaft 3 are in meshing engagement with each other in a rotational direction. In other words, the first clutch member 4a is connected to the output shaft 3. The first clutch member 4a includes circumferentially arranged recesses A. The recesses A are defined in an outer peripheral surface of the first clutch member 4a. The recesses A are provided with: first sloped surfaces 4aa serving as components of pressing assist cams; and third sloped surfaces 4ab serving as components of back torque limiter cams. The first clutch member 4a includes bosses 4ad. The bosses 4ad are provided with insertion holes through which bolts B for connecting the first clutch member 4a to a securing member 8 are to be inserted. The first clutch member 4a includes circumferentially arranged through holes 4ag passing through the first clutch member 4a in the axial direction of the output shaft 3. The through holes 4ag are located radially outward of the insertion hole 4ac. The through holes 4ag are each disposed between adjacent ones of the bosses 4ad.

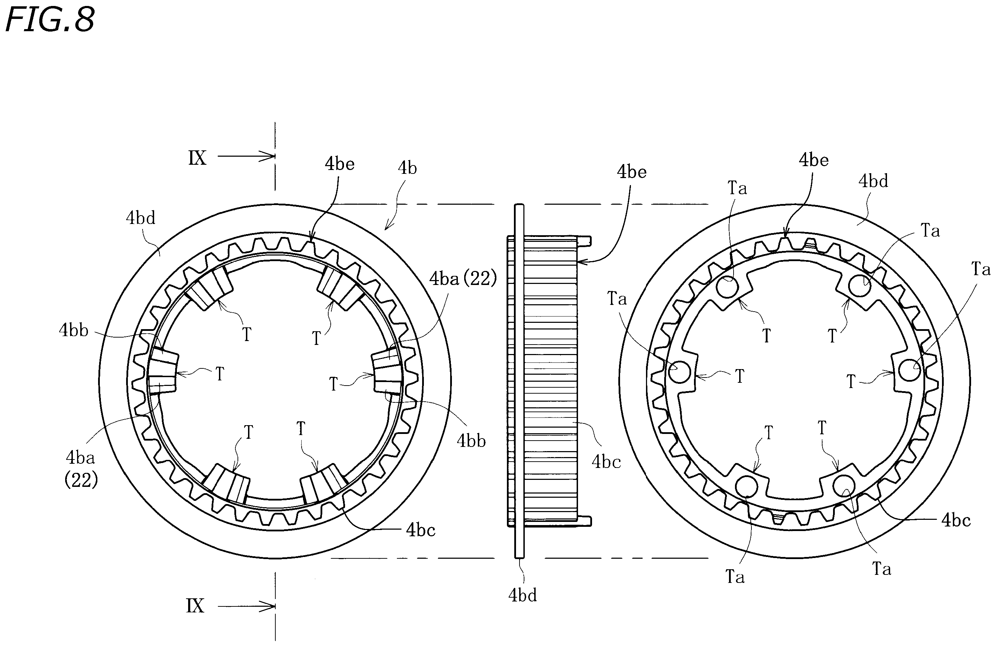

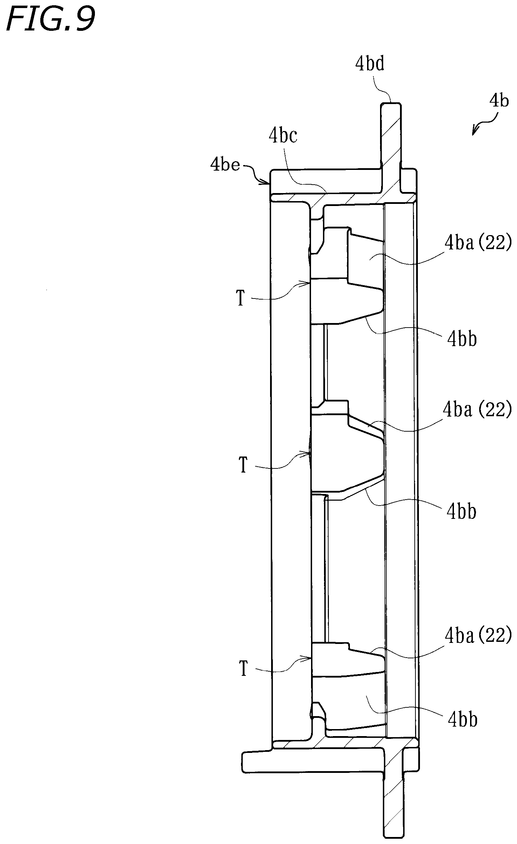

As illustrated in FIG. 8, the second clutch member 4b includes: an annular outer peripheral wall 4be; and a flange 4bd extending radially outward from the outer peripheral wall 4be. The outer peripheral wall 4be is provided with spline-fitting portions 4bc. The spline-fitting portions 4bc have the driven clutch plates 7 attached thereto through spline-fitting. In other words, the second clutch member 4b holds the driven clutch plates 7. The second clutch member 4b is configured to be movable in the axial direction of the output shaft 3. As will be described below, the second clutch member 4b is configured to be movable in a direction toward the pressure member 5 (i.e., a direction indicated by an arrow DR2 in FIG. 2) with an urging force of the weight members 10 when generation of a second pressing force is being restrained by a restraining member D (which will be described below). The second clutch member 4b includes circumferentially arranged protrusions T fittable into the recesses A. As illustrated in FIG. 9, the protrusions T are provided with: second sloped surfaces 4ba serving as components of the pressing assist cams; and fourth sloped surfaces 4bb serving as components of the back torque limiter cams.

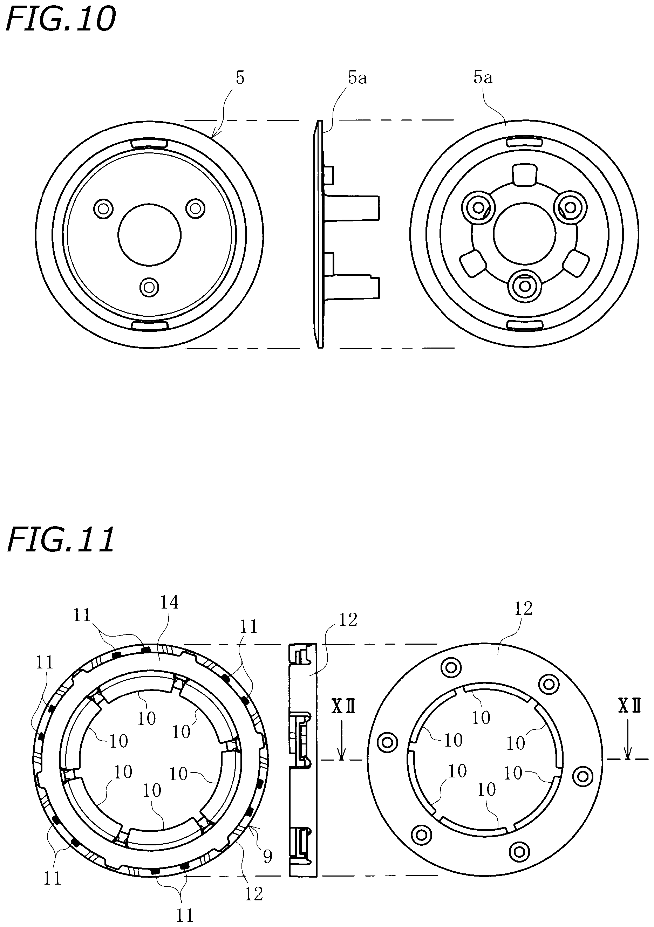

As illustrated in FIG. 10, the pressure member 5 includes a disk-shaped member provided on its edge with a flange 5a. The pressure member 5 is configured to be able to push the driving clutch plates 6 and the driven clutch plates 7 together with the clutch member 4. The pressure member 5 presses the driving clutch plates 6 and the driven clutch plates 7 against each other, enabling transmission of the driving force of the engine E to the driving wheel W. Specifically, the driving clutch plates 6 and the driven clutch plates 7 are disposed in a stacked arrangement between the flange 5a of the pressure member 5 and the flange 4bd of the second clutch member 4b. Upon movement of the second clutch member 4b in the direction toward the pressure member 5 (i.e., the direction indicated by the arrow DR2 in FIG. 2), the driving clutch plates 6 and the driven clutch plates 7 are pressed against each other, with the result that a rotational force of the clutch housing 2 is transmitted to the output shaft 3 through the second clutch member 4b and the first clutch member 4a. Upon movement of the second clutch member 4b in a direction away from the pressure member 5 (i.e., the direction indicated by the arrow DR1 in FIG. 2), a pressing force applied to the driving clutch plates 6 and the driven clutch plates 7 is released, which causes the first clutch member 4a and the second clutch member 4b to stop following the rotation of the clutch housing 2 and thus prevents the rotational force of the clutch housing 2 from being transmitted to the output shaft 3.

As described above, with the driving clutch plates 6 and the driven clutch plates 7 pressed against each other, the rotational force (i.e., the driving force of the engine E) input to the clutch housing 2 is transmitted to the driving wheel side (i.e., the transmission M) through the output shaft 3. With the driving clutch plates 6 and the driven clutch plates 7 released from being pressed against each other, the rotational force input to the clutch housing 2 is prevented from being transmitted to the output shaft 3.

With the first clutch member 4a and the second clutch member 4b fitted to each other, the protrusions T are fitted into the recesses A. With the first clutch member 4a and the second clutch member 4b fitted to each other, the first sloped surfaces 4aa and the second sloped surfaces 4ba face each other so as to constitute the pressing assist cams, and the third sloped surfaces 4ab and the fourth sloped surfaces 4bb face each other so as to constitute the back torque limiter cams. As illustrated in FIG. 8, the protrusions T are provided with housing recesses Ta in which below-described coil springs D2 (see FIG. 3) are to be housed.

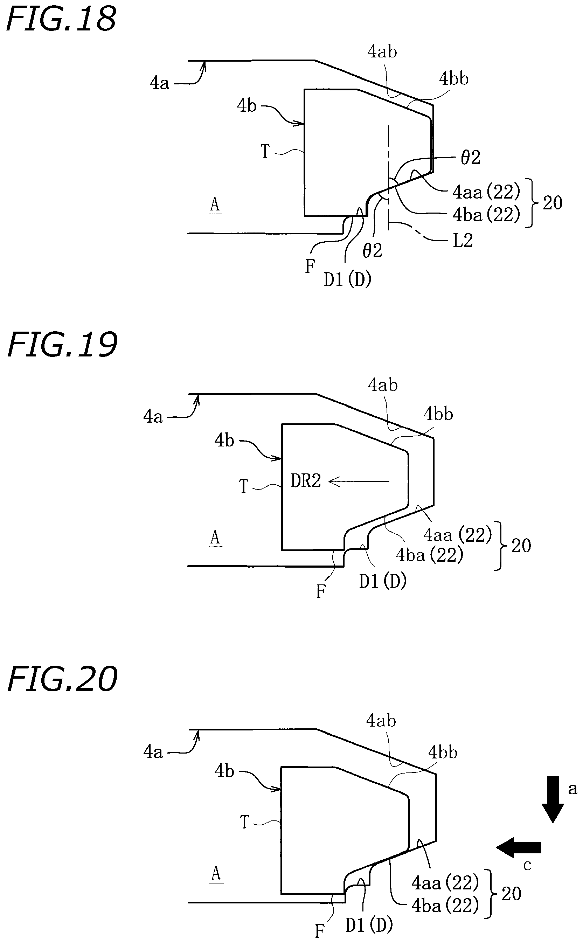

The power transmission apparatus K includes a pressing force amplifying mechanism 20 (see FIG. 18). Upon an increase in rotational speed of the engine E, the pressing force amplifying mechanism 20 generates the second pressing force for amplifying the pressing force applied to the driving clutch plates 6 and the driven clutch plates 7. The second pressing force is an example of cam thrust. When the rotational force input to the input gear 1 is transmittable to the output shaft 3, the pressing force amplifying mechanism 20 generates the second pressing force for amplifying the pressing force applied to the driving clutch plates 6 and the driven clutch plates 7. The pressing force amplifying mechanism 20 is configured to generate the second pressing force as a result of a portion of the clutch member 4 (i.e., the second clutch member 4b in this embodiment) moving in the direction toward the pressure member 5 (i.e., the direction indicated by the arrow DR2 in FIG. 2). The pressing force amplifying mechanism 20 is configured to generate the second pressing force as a result of a portion of the clutch member 4 (i.e., the second clutch member 4b in this embodiment) moving in the direction toward the pressure member 5 while rotating around an axis 3C (see FIG. 5A) of the output shaft 3 in a first circumferential direction S1 (see FIG. 5A). The pressing force amplifying mechanism 20 applies the second pressing force to the driving clutch plates 6 and the driven clutch plates 7 in the direction indicated by the arrow DR2 in FIG. 2 (i.e., a leftward direction in FIG. 2). The pressing force amplifying mechanism 20 includes amplifying cams 22. The amplifying cams 22 generate the second pressing force. The amplifying cams 22 are provided on portions of the first clutch member 4a and the second clutch member 4b that are allowed to come into contact with each other. The amplifying cams 22 are provided in the recesses A of the first clutch member 4a and on the protrusions T of the second clutch member 4b. The amplifying cams 22 include: the first sloped surfaces 4aa defined in the recesses A; and the second sloped surfaces 4ba defined on the protrusions T and slidable relative to the first sloped surfaces 4aa. Operation of the amplifying cams 22 (i.e., sliding of the first sloped surfaces 4aa and the second sloped surfaces 4ba relative to each other) generates the second pressing force. In the present embodiment, the number of amplifying cams 22 included in the pressing force amplifying mechanism 20 is six. The number of amplifying cams 22, however, is not limited to six. Each amplifying cam 22 is an example of a first cam.

Suppose that the rotational speed of the engine E is increased and the rotational force input to the input gear 1 and the clutch housing 2 is thus transmittable to the output shaft 3 through the first clutch member 4a and the second clutch member 4b (i.e., the weight members 10 are each located at an outer diameter position). In this case, as illustrated in FIG. 20, a rotational force is applied to the second clutch member 4b in a direction indicated by an arrow a in FIG. 20. This causes the first sloped surfaces 4aa and the second sloped surfaces 4ba to slide relative to each other such that the amplifying cams 22 operate so as to apply a force to the second clutch member 4b in a direction indicated by an arrow c in FIG. 20. The second clutch member 4b then moves in the direction toward the pressure member 5 (i.e., a direction in which the flange 4bd of the second clutch member 4b moves toward the flange 5a of the pressure member 5, or the direction indicated by the arrow DR2 in FIGS. 2 and 3) so as to generate the second pressing force for amplifying the pressing force applied to the driving clutch plates 6 and the driven clutch plates 7.

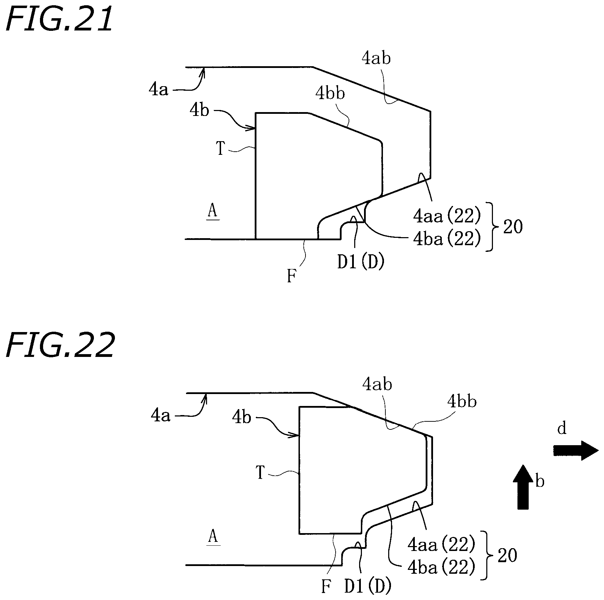

As illustrated in FIG. 22, when rotation of the output shaft 3 is above the rotational speed of the input gear 1 and the clutch housing 2 such that a back torque is produced, a rotational force is applied to the second clutch member 4b in a direction indicated by an arrow b in FIG. 22. This causes the third sloped surfaces 4ab and the fourth sloped surfaces 4bb to slide relative to each other such that the back torque limiter cams operate so as to move the second clutch member 4b in a direction away from the pressure member 5 (i.e., a direction indicated by an arrow d in FIG. 22), which releases the pressing force (i.e., the second pressing force in this case) applied to the driving clutch plates 6 and the driven clutch plates 7. This makes it possible to prevent the power transmission apparatus K and/or a power source (i.e., the engine E) from encountering a malfunction resulting from the back torque.

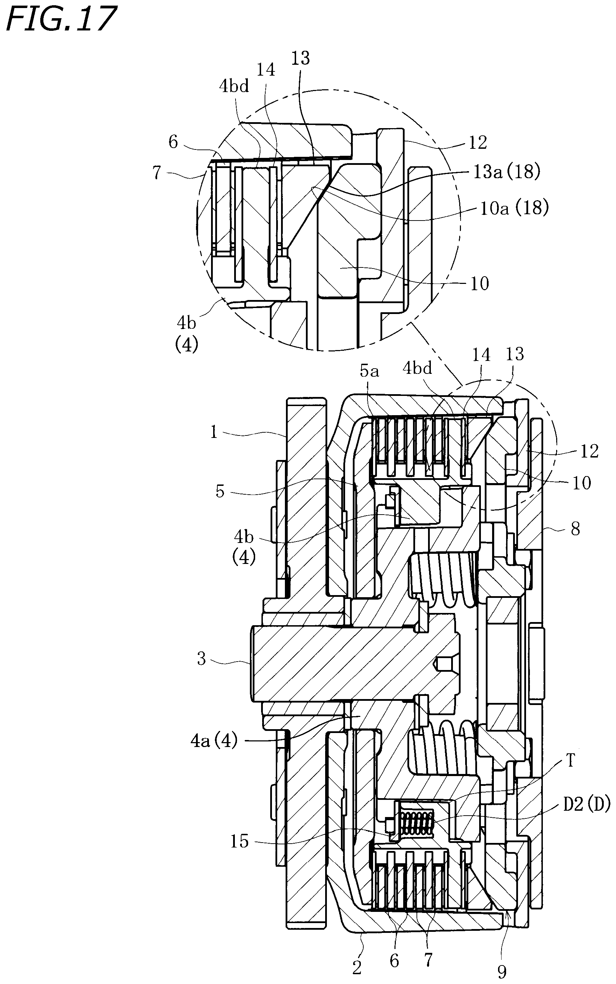

As illustrated in FIGS. 11 to 13, the centrifugal clutch means 9 includes the weight members 10 each movable from an inner diameter position (see FIG. 2) to the outer diameter position (see FIG. 17) with centrifugal force resulting from rotation of the clutch housing 2. The centrifugal clutch means 9 is disposed adjacent to the opening of the clutch housing 2 (i.e., in the right portion of FIGS. 2 and 3). The centrifugal clutch means 9 is disposed opposite to the pressure member 5, with the driving clutch plates 6 and the driven clutch plates 7 located therebetween. In this embodiment, the centrifugal clutch means 9 is disposed in the direction indicated by the arrow DR1 in FIG. 2 relative to the pressure member 5. When the weight members 10 are each located at the outer diameter position, the centrifugal clutch means 9 presses the driving clutch plates 6 and the driven clutch plates 7 against each other such that the driving force of the engine E is transmittable to the driving wheel W. The centrifugal clutch means 9 is configured to apply a first pressing force to the driving clutch plates 6 and the driven clutch plates 7 upon movement of each weight member 10 from the inner diameter position to the outer diameter position. Upon moving from the inner diameter position to the outer diameter position, each weight member 10 urges the clutch member 4 (i.e., the second clutch member 4b in this case) in the direction toward the pressure member 5 (i.e., the direction indicated by the arrow DR2 in FIG. 2). The centrifugal clutch means 9 is configured to, when the weight members 10 are each located at the inner diameter position, release the pressing force applied to the driving clutch plates 6 and the driven clutch plates 7 so as to be able to cut off transmission of the driving force of the engine E to the driving wheel W. More specifically, the centrifugal clutch means 9 is configured to, when the weight members 10 each located at the inner diameter position, release the first pressing force applied to the driving clutch plates 6 and the driven clutch plates 7 so as to be able to cut off transmission of the driving force of the engine E to the wheel.

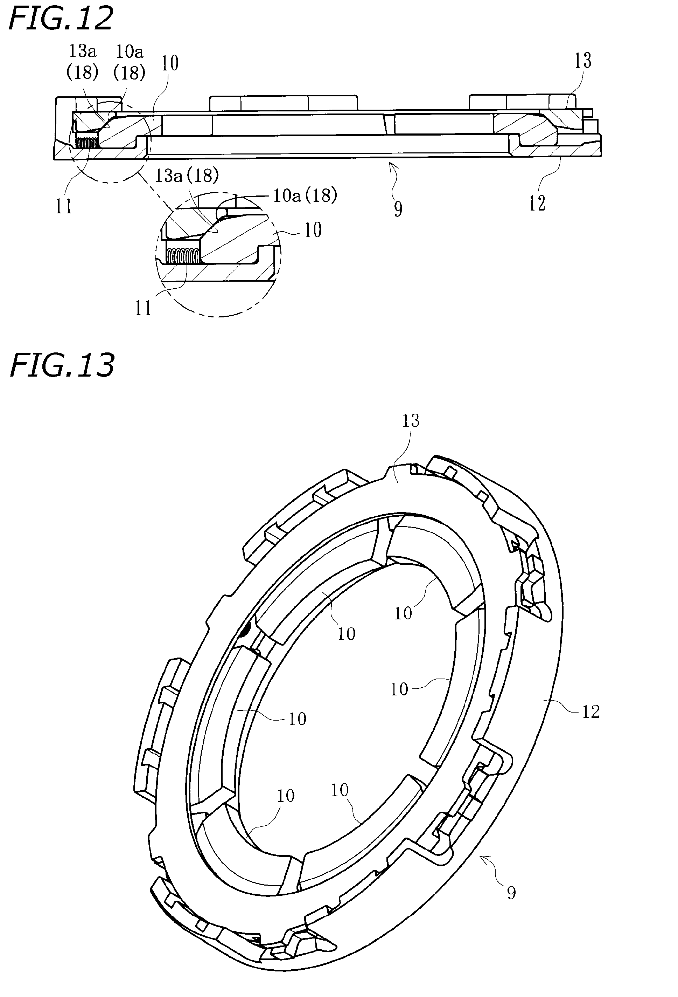

As illustrated in FIG. 12, the centrifugal clutch means 9 includes the weight members 10, springs 11, a retainer 12, and a pushed member 13. The weight members 10 are arranged circumferentially. The weight members 10 are housed in the retainer 12 having an annular shape. The weight members 10 are made of metal. The weight members 10 are each held at the inner diameter position (see FIG. 2), with no centrifugal force applied thereto. For example, when the rotational speed of the engine E is equal to or below a predetermined rotational speed, the weight members 10 are each located at the inner diameter position. The weight members 10 are configured such that upon application of centrifugal force thereto (i.e., when the rotational speed of the engine E has exceeded the predetermined rotational speed), the weight members 10 move radially outward against the urging force of the springs 11 and then each reach the outer diameter position (FIG. 17). The predetermined rotational speed is higher than an idling engine speed.

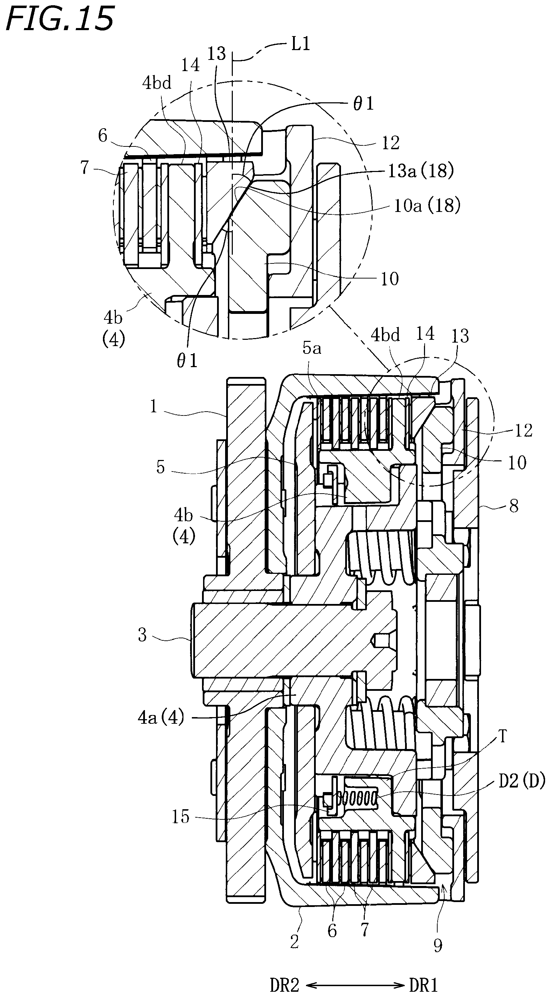

As illustrated in FIG. 12, the centrifugal clutch means 9 includes pushing cams 18 to move the clutch member 4 (i.e., the second clutch member 4b in this case) in the direction toward the pressure member 5 (i.e., the direction indicated by the arrow DR2 in FIG. 2). Each pushing cam 18 is an example of a second cam. The pushing cams 18 generate the first pressing force. The pushing cams 18 are provided in regions where the weight members 10 and the pushed member 13 are allowed to come into contact with each other. The pushing cams 18 are provided on the weight members 10 and the pushed member 13. The pushing cams 18 include: inclined surfaces 10a defined on ends (i.e., radially outer ends) of the weight members 10; and an inclined surface 13a defined on the pushed member 13. The inclined surfaces 10a and the inclined surface 13a are provided to be slidable relative to each other. An inclination angle θ1 (see FIG. 15) of the inclined surfaces 10a and 13a of the pushing cams 18 with respect to a radial direction perpendicular to the axial direction of the output shaft 3 differs from an inclination angle θ2 (see FIG. 18) of the first and second sloped surfaces 4aa and 4ba with respect to the radial direction. The inclination angle θ1 is formed between a radially extending straight line L1 and the inclined surfaces 10a and 13a. The inclination angle θ2 is formed between a radially extending straight line L2 and the first and second sloped surfaces 4aa and 4ba. Each of the inclined surfaces 10a and 13a is an example of a cam surface. The inclination angle θ2 of the first and second sloped surfaces 4aa and 4ba with respect to the radial direction is greater than the inclination angle θ1 of the inclined surfaces 10a and 13a with respect to the radial direction.

Upon movement of each weight member 10 from the inner diameter position to the outer diameter position with centrifugal force, the pushed member 13 moves in the direction indicated by the arrow DR2 in FIG. 2 so as to push the flange 4bd of the second clutch member 4b through a pushed ring 14. The driving clutch plates 6 and the driven clutch plates 7 are thus pressed against each other. In other words, the first pressing force is applied to the driving clutch plates 6 and the driven clutch plates 7. Pressing the driving clutch plates 6 and the driven clutch plates 7 against each other results in transmission of the driving force of the engine E to the output shaft 3.

Upon a decrease in centrifugal force, the urging force of the springs 11 moves each weight member 10 from the outer diameter position to the inner diameter position, and the urging force of the coil springs D2 (see FIG. 3) moves the second clutch member 4b in the direction indicated by the arrow DR1 in FIG. 3, thus releasing the pressing force applied to the driving clutch plates 6 and the driven clutch plates 7. Releasing the pressing force applied to the driving clutch plates 6 and the driven clutch plates 7 cuts off transmission of the driving force of the engine E to the output shaft 3.

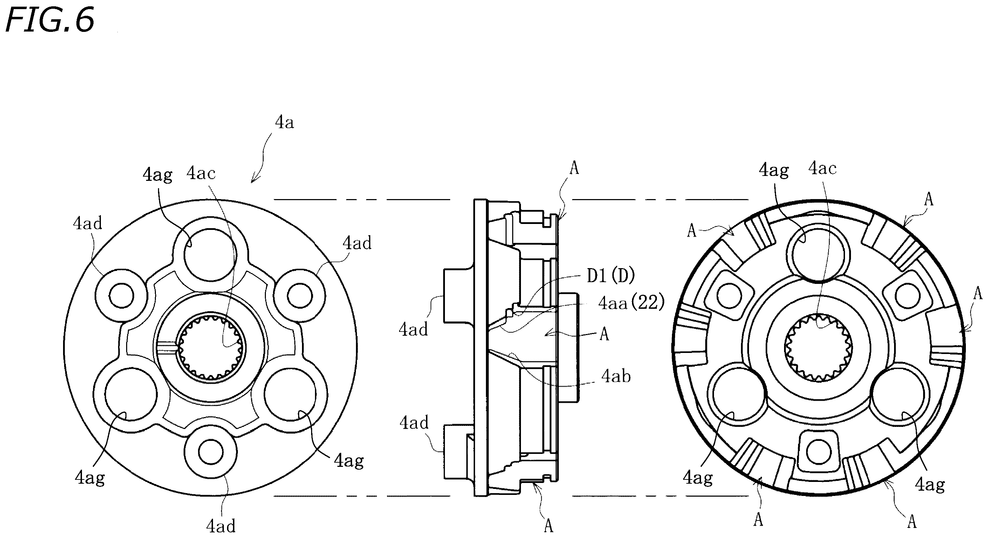

The power transmission apparatus K includes the restraining member D (see FIGS. 3 and 6) to restrain transmission of the driving force of the engine E (e.g., a portion of the driving force of the engine E) to the driving wheel W, which occurs as a result of the driving clutch plates 6 and the driven clutch plates 7 being pressed against each other, when the rotational speed of the engine E is equal to or below the predetermined rotational speed (e.g., when the weight members 10 are each located at the inner diameter position). The restraining member D restrains the pressing force amplifying mechanism 20 from generating the second pressing force when the rotational speed of the engine E is equal to or below the predetermined rotational speed. The restraining member D restrains generation of the second pressing force by restraining operation of the amplifying cams 22 when the rotational speed of the engine E is equal to or below the predetermined rotational speed. The restraining member D restrains generation of the second pressing force within at least a portion of a rotational speed range in which the rotational speed of the engine E is below the idling engine speed. In the present embodiment, the restraining member D restrains generation of the second pressing force within an entirety of the rotational speed range in which the rotational speed of the engine E is below the idling engine speed. The restraining member D allows the pressing force amplifying mechanism 20 to generate the second pressing force when the rotational speed of the engine E is higher than the predetermined rotational speed. The restraining member D allows generation of the second pressing force by allowing operation of the amplifying cams 22 when the rotational speed of the engine E is higher than the predetermined rotational speed. The restraining member D includes: stepped portions D1 (see FIG 6) to be in engagement with the protrusions T of the second clutch member 4b; and the coil springs D2 (see FIG. 3). The restraining member D is provided in regions where the first clutch member 4a and the second clutch member 4b are allowed to come into contact with each other.

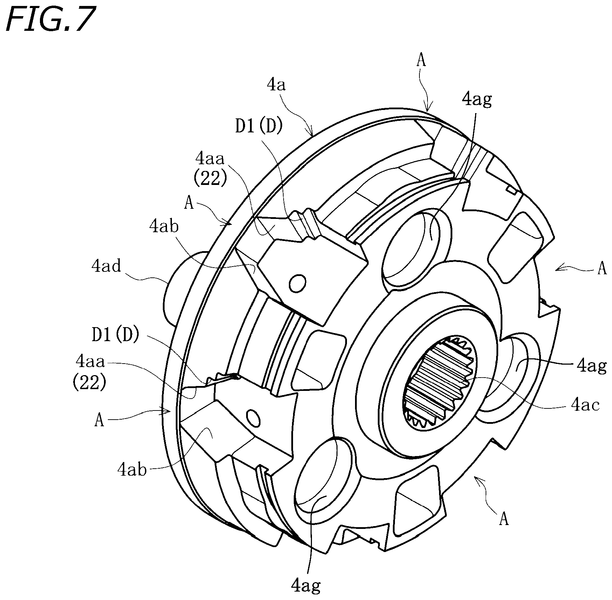

As illustrated in FIGS. 6 and 7, the stepped portions D1 are provided in regions where the first clutch member 4a and the second clutch member 4b are allowed to come into contact with each other. The stepped portions D1 are defined on predetermined portions of the recesses A of the first clutch member 4a. Bringing the protrusions T of the second clutch member 4b into engagement with the stepped portions D1 restrains the first sloped surfaces 4aa and the second sloped surfaces 4ba from sliding relative to each other. Bringing the protrusions T out of engagement with the stepped portions D1 lifts the restraint on sliding of the first sloped surfaces 4aa and the second sloped surfaces 4ba relative to each other.

As illustrated in FIG. 3, the coil springs D2 are housed in the housing recesses Ta defined in the protrusions T of the second clutch member 4b. The coil springs D2 are assembled to the clutch member 4 such that an end of each coil spring D2 is in abutment with a supporting ring 15 secured to the first clutch member 4a. The coil springs D2 urge the second clutch member 4b in the direction indicated by the arrow DR1 in FIG. 3 through the protrusions T. Specifically, the coil springs 16 urge the second clutch member 4b, which is a portion of the clutch member 4, in the direction away from the pressure member 5. The direction in which the coil springs D2 urge the second clutch member 4b (i.e., the direction indicated by the arrow DR1 in FIG. 3) and the direction in which the first pressing force is applied to the driving clutch plates 6 and the driven clutch plates 7 by the weight members 10 (i.e., the direction indicated by the arrow DR2 in FIG. 3) face each other. An axis of each coil spring D2 is parallel to the axis of the output shaft 3. As illustrated in FIG. 5A, the coil springs D2 are disposed between the output shaft 3 and the outer peripheral wall 4be of the second clutch member 4b in the radial direction perpendicular to the axial direction of the output shaft 3. The coil springs D2 are disposed between adjacent ones of the through holes 4ag in a circumferential direction. When the first pressing force is equal to or smaller than the urging force of the coil springs D2, the first sloped surfaces 4aa and the second sloped surfaces 4ba are restrained from sliding relative to each other. Increasing the first pressing force such that the first pressing force is greater than the urging force of the coil springs D2 lifts the restraint on sliding of the first sloped surfaces 4aa and the second sloped surfaces 4ba relative to each other.

As illustrated in FIG. 18, the restraining member D restrains (e.g., restricts) operation of the amplifying cams 22 when the weight members 10 are each located at the inner diameter position (i.e., when the rotational speed of the engine E is equal to or below the predetermined rotational speed). When the weight members 10 are each located at the inner diameter position, the restraining member D is in engagement (or abutment) with predetermined regions F of the protrusions T so as to restrain (e.g., restrict) the first sloped surfaces 4aa and the second sloped surfaces 4ba from sliding relative to each other. In other words, the restraining member D restrains generation of the second pressing force. A portion of the clutch member (i.e., the second clutch member 4b in this case) is configured to be movable in the direction toward the pressure member 5 (i.e., the direction indicated by the arrow DR2 in FIG. 2) with the urging force of the weight members 10 when the restraining member D is restraining generation of the second pressing force. Thus, as illustrated in FIG. 19, the restraining member D is brought out of engagement with the predetermined regions F of the protrusions T (or the predetermined regions F of the protrusions T are moved away from the restraining member D) upon movement of each weight member 10 from the inner diameter position to the outer diameter position. As illustrated in FIG. 20, with the restraining member D being out of engagement with the predetermined regions F of the protrusions T, the restraining member D allows the first sloped surfaces 4aa and the second sloped surfaces 4ba to slide relative to each other. Upon movement of each weight member 10 from the inner diameter position to the outer diameter position, the restraining member D lifts the restraint on operation of the amplifying cams 22 so as to enable the amplifying cams 22 to operate. Specifically, the restraining member D lifts the restraint on generation of the second pressing force in the course of movement of each weight member 10 from the inner diameter position to the outer diameter position. In this case, the restraining member D may lift the restraint on generation of the second pressing force, for example, when the rotational speed of the engine E is such that the driving clutch plates 6 and the driven clutch plates 7 are pressed against each other to start transmission of the driving force of the engine E to the driving wheel W. Accordingly, with the driving clutch plates 6 and the driven clutch plates 7 being pressed against each other (i.e., with engagement of the centrifugal clutch means 9 being started) such that the driving force of the engine E is transmitted to the driving wheel W, the pressing force applied to the driving clutch plates 6 and the driven clutch plates 7 is effectively amplifiable.

Suppose that the weight members 10 are each located at the inner diameter position (i.e., the rotational speed of the engine E is equal to or below the predetermined rotational speed). In this case, if a drag torque is produced between the driving clutch plates 6 and the driven clutch plates 7, the amplifying cams 22 would be restrained from being unintentionally operated because the stepped portions D1 are in engagement (or abutment) with the predetermined regions F of the protrusions T as illustrated in FIG. 18. Suppose again that the weight members 10 are each located at the inner diameter position (i.e., the rotational speed of the engine E is equal to or below the predetermined rotational speed). In this case, if a drag torque is produced between the driving clutch plates 6 and the driven clutch plates 7, the amplifying cams 22 would be restrained from being unintentionally operated because the coil springs D2 urge the second clutch member 4b in the direction away from the pressure member 5. As illustrated in FIG. 15, an increase in the rotational speed of the engine E causes each weight member 10 to start moving from the inner diameter position toward the outer diameter position, and once the first pressing force has exceeded a set load of the coil springs D2, the second clutch member 4b moves in the direction indicated by the arrow DR2 in FIG. 15 (i.e., the direction in which the flange 4bd of the second clutch member 4b moves toward the flange 5a of the pressure member 5). As illustrated in FIG. 19, the protrusions T in this case move in the direction indicated by the arrow DR2 in FIG. 19, with the result that the stepped portions D1 are brought out of engagement with the predetermined regions F of the protrusions T (or the predetermined regions F of the protrusions T are moved away from the stepped portions D1) so as to enable the amplifying cams 22 to operate.

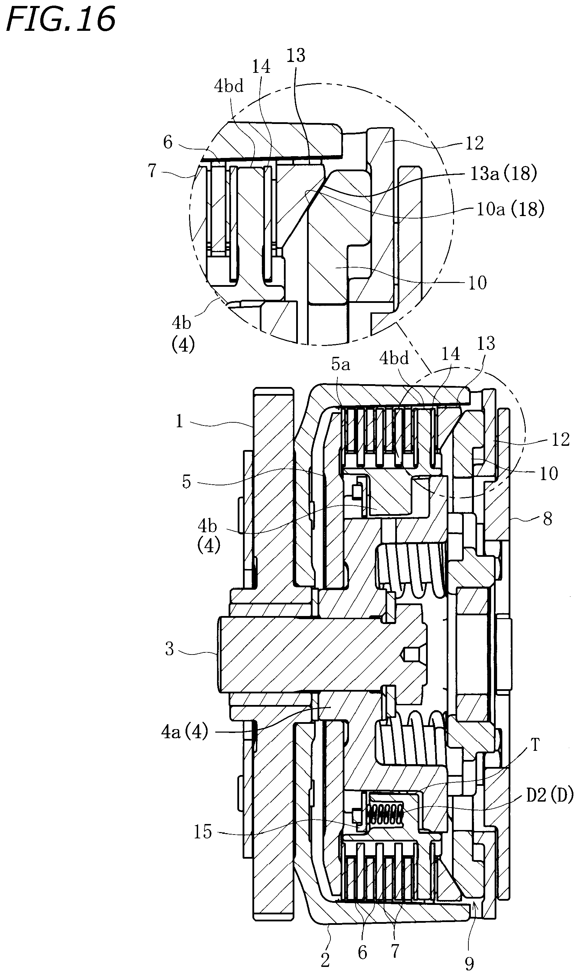

Suppose that each weight member 10 is in the course of moving from the inner diameter position to the outer diameter position as illustrated in FIG. 16, the first sloped surfaces 4aa and the second sloped surfaces 4ba slide relative to each other so as to cause the amplifying cams 22 to operate as illustrated in FIG. 20. In this case, in addition to the first pressing force generated by the centrifugal clutch means 9, the operation of the amplifying cams 22 generates the second pressing force for amplifying the pressing force applied to the driving clutch plates 6 and the driven clutch plates 7. When the weight members 10 each have reached the outer diameter position as illustrated in FIG. 17, the predetermined regions F of the protrusions T come into abutment with inner peripheral edges of the recesses A so as to stop the operation of the amplifying cams 22 as illustrated FIG. 21.

### Second Embodiment

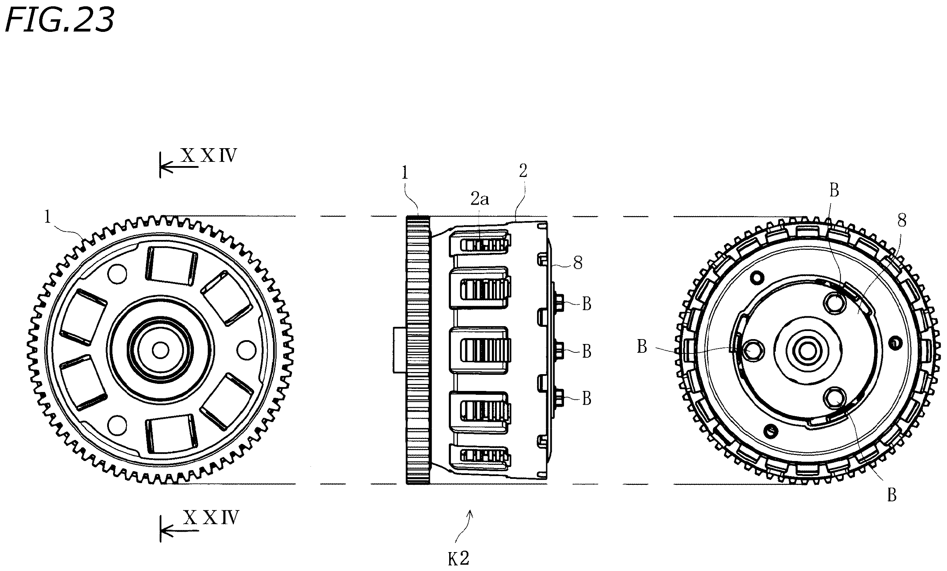

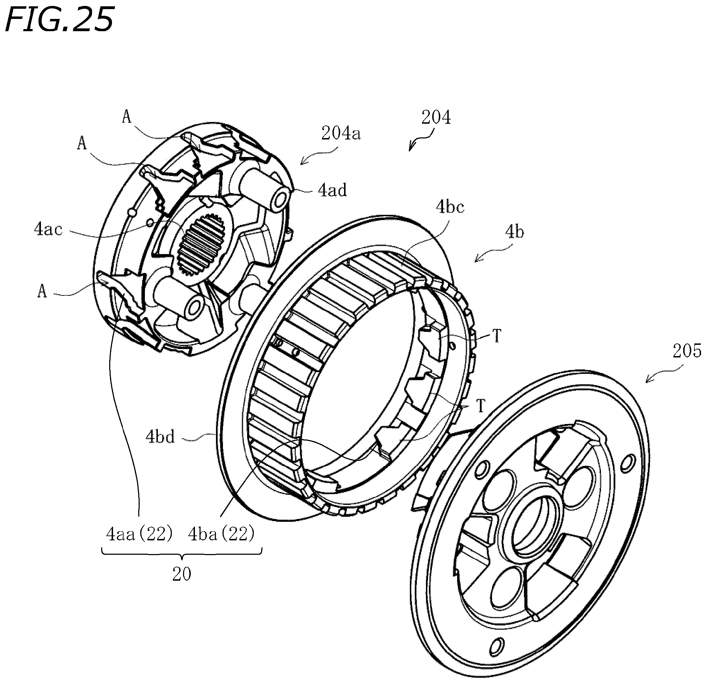

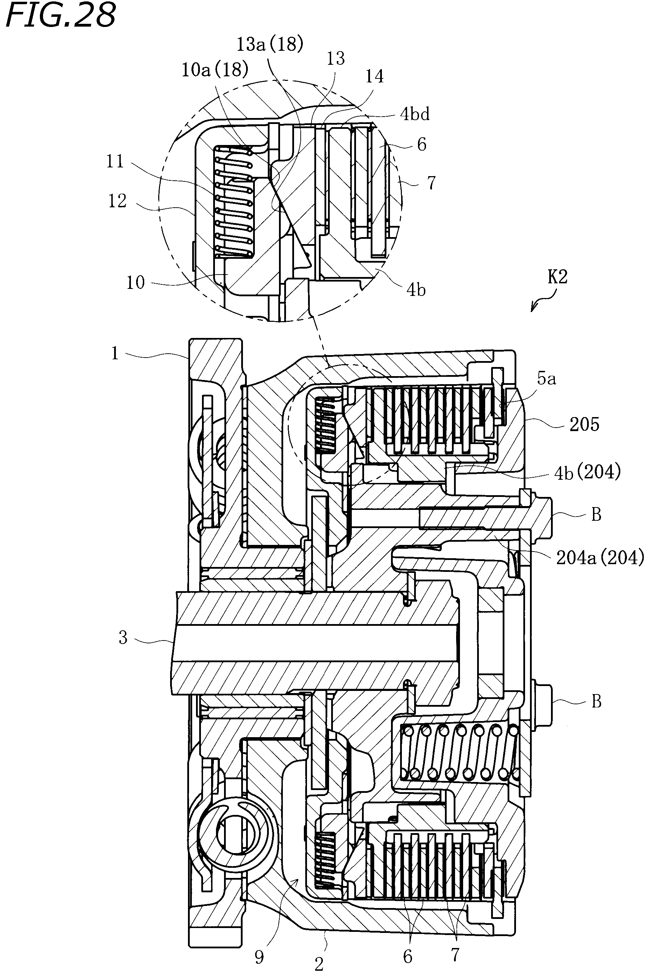

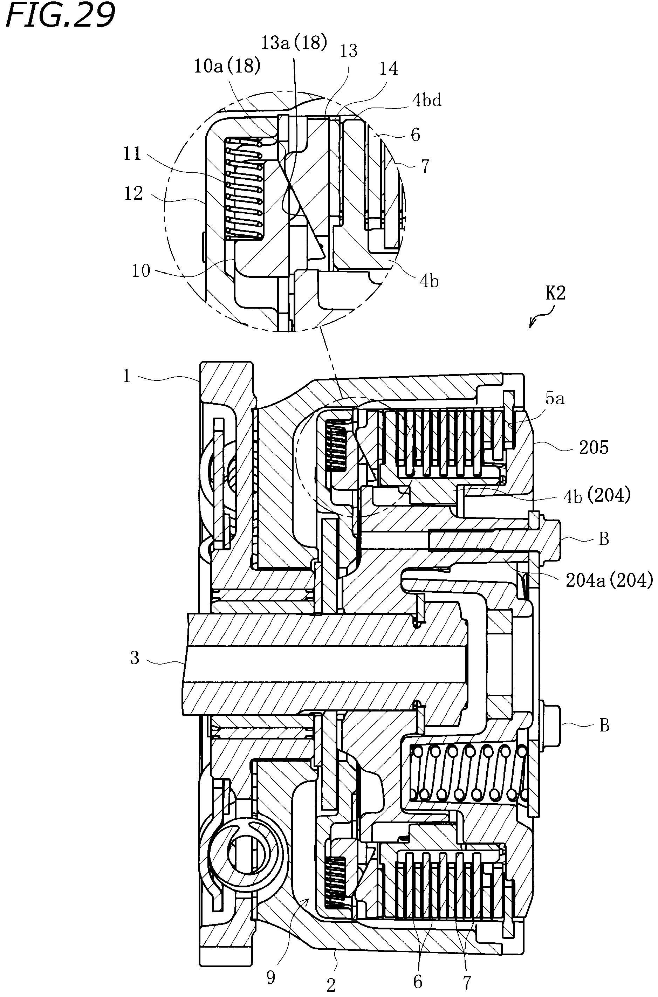

As illustrated in FIGS. 23 to 30, a power transmission apparatus K2 includes: a clutch housing 2; an output shaft 3; a clutch member 204; a pressure member 205; driving clutch plates 6 and driven clutch plates 7 assembled in a stacked arrangement; and a centrifugal clutch means 9 including weight members 10. Components similar to those in the first embodiment are identified by the same reference signs and will not be described in detail.

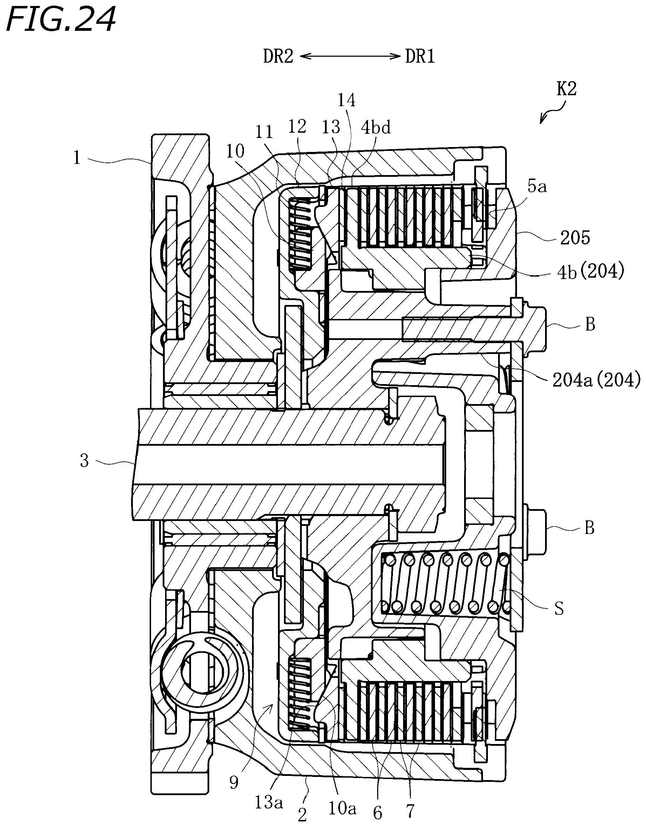

The power transmission apparatus K2 includes a clutch spring S. The clutch spring S urges the pressure member 205 in a direction toward the clutch member 204 (i.e., a direction indicated by an arrow DR2 in FIG. 24).

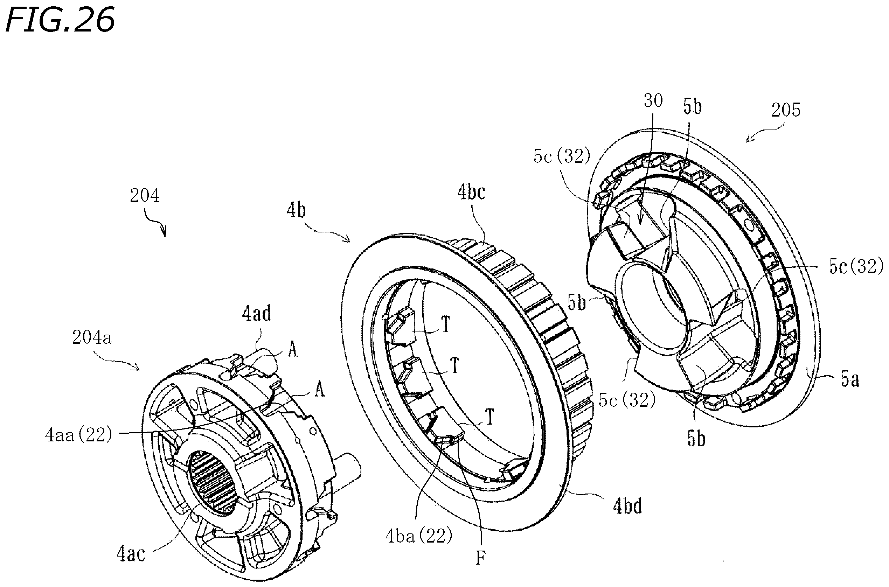

As illustrated in FIG. 26, the pressure member 5 is provided with sixth sloped surfaces 5b and eighth sloped surfaces 5c. The pressure member 5 includes fitting teeth 5e to hold the driven clutch plates 7. The fitting teeth 5e are arranged circumferentially. The fitting teeth 5e are located radially inward of a flange 5a. The fitting teeth 5e are located radially outward of the sixth sloped surfaces 5b and the eighth sloped surfaces 5c. The pressure member 5 is provided to be movable toward or away from the clutch member 4. The pressure member 5 is configured to be able to push the driving clutch plates 6 and the driven clutch plates 7.

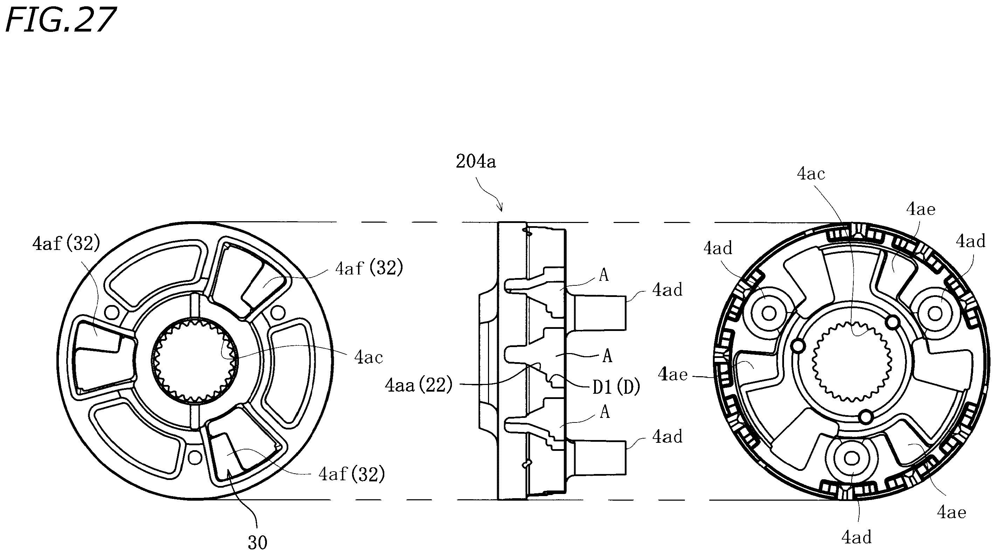

As illustrated in FIG. 27, a first clutch member 204a is provided with fifth sloped surfaces 4ae and seventh sloped surfaces 4af. With the first clutch member 204a and the pressure member 205 assembled to each other, the fifth sloped surfaces 4ae and the sixth sloped surfaces 5b face each other so as to constitute back torque limiter cams, and the seventh sloped surfaces 4af and the eighth sloped surfaces 5c face each other so as to constitute pressing assist cams. When the rotational speed of the engine E is equal to or above a predetermined rotational speed, the seventh sloped surfaces 4af and the eighth sloped surfaces 5c slide relative to each other. The pressure member 205 thus moves in a direction indicated by an arrow DR1 in FIG. 24 such that the driving clutch plates 6 and the driven clutch plates 7 are pressed against each other. In other words, a third pressing force is applied to the driving clutch plates 6 and the driven clutch plates 7. Sliding of the fifth sloped surfaces 4ae and the sixth sloped surfaces 5b relative to each other moves the pressure member 5 in the direction indicated by the arrow DR2 in FIG. 24. This releases the pressing force (i.e., the third pressing force in this case) applied to the driving clutch plates 6 and the driven clutch plates 7.

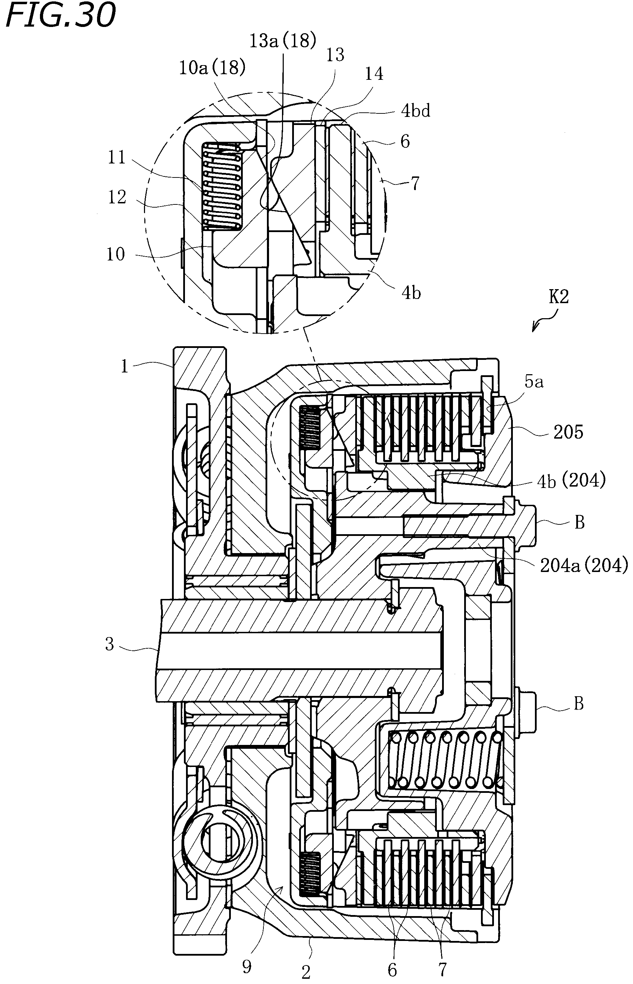

As illustrated in FIG. 24, the centrifugal clutch means 9 is disposed opposite to the pressure member 205, with the driving clutch plates 6 and the driven clutch plates 7 located therebetween. In this embodiment, the centrifugal clutch means 9 is disposed in the direction indicated by the arrow DR2 in FIG. 24 relative to the pressure member 205. The weight members 10 of the centrifugal clutch means 9 are each configured to be movable from an inner diameter position (see FIG. 24) to an outer diameter position (see FIG. 30) with centrifugal force resulting from rotation of the clutch housing 2. In moving from the inner diameter position to the outer diameter position, each weight member 10 urges the clutch member 4 (i.e., a second clutch member 4b in this case) in a direction toward the pressure member 5 (i.e., the direction indicated by the arrow DR1 in FIG. 24).

A pressing force amplifying mechanism 20 applies a second pressing force to the driving clutch plates 6 and the driven clutch plates 7 in the direction indicated by the arrow DR1 in FIG. 24.

The power transmission apparatus K2 includes an assist cam mechanism 30. Upon rotation of the first clutch member 204a relative to the pressure member 205, the assist cam mechanism 30 generates the third pressing force for amplifying the pressing force applied to the driving clutch plates 6 and the driven clutch plates 7. The assist cam mechanism 30 applies the third pressing force to the driving clutch plates 6 and the driven clutch plates 7 in the direction indicated by the arrow DR2 in FIG. 24. Specifically, the direction in which the second pressing force is to be applied (i.e., the direction indicated by the arrow DR1 in FIG. 24) and the direction in which the third pressing force is to be applied (i.e., the direction indicated by the arrow DR2 in FIG. 24) face each other. The assist cam mechanism 30 includes assist cams 32. The assist cams 32 include the seventh sloped surfaces 4af and the eighth sloped surfaces 5c. In the present embodiment, the number of assist cams 32 included in the assist cam mechanism 30 is three. The number of assist cams 32, however, is not limited to three. In the present embodiment, the number of amplifying cams 22 is six, which means that the number of amplifying cams 22 is larger than the number of assist cams 32. Alternatively, the number of amplifying cams 22 may be equal to the number of assist cams 32.

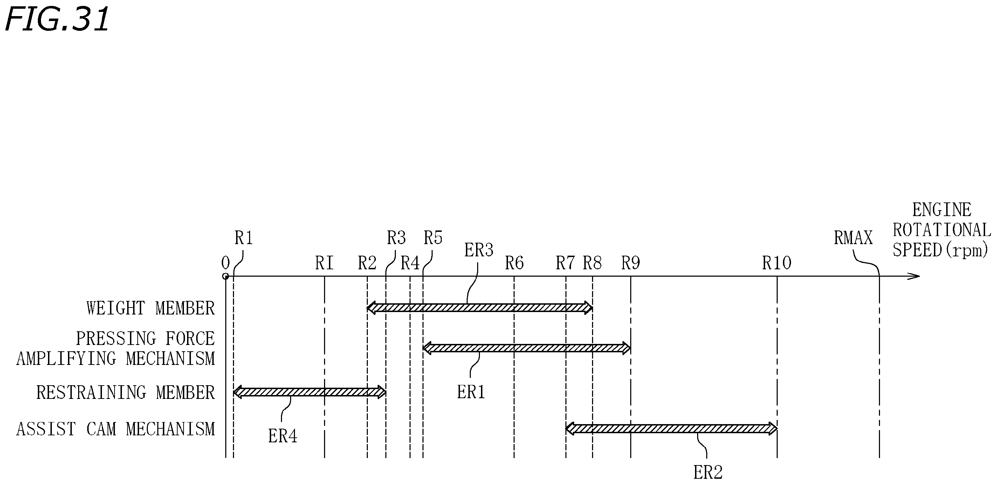

As indicated by an arrow ER1 in FIG. 31, the pressing force amplifying mechanism 20 operates when the rotational speed of the engine E falls within the range of between R5 and R9. The pressing force amplifying mechanism 20 starts generating the second pressing force when the rotational speed of the engine E is R5, and finishes generating the second pressing force when the rotational speed of the engine E is R9. As indicated by an arrow ER2 in FIG. 31, the assist cam mechanism 30 operates when the rotational speed of the engine E falls within the range of between R7 and R10. The assist cam mechanism 30 starts generating the third pressing force when the rotational speed of the engine E is R7, and finishes generating the third pressing force when the rotational speed of the engine E is R10. As indicated by an arrow ER3 in FIG. 31, the weight members 10 operate when the rotational speed of the engine E falls within the range of between R2 and R8. The weight members 10 each start moving from the inner diameter position toward the outer diameter position when the rotational speed of the engine E is R2, and are each located at the outer diameter position upon finishing its movement when the rotational speed of the engine E is R8. As indicated by an arrow ER4 in FIG. 31, a restraining member D operates when the rotational speed of the engine E falls within the range of between R1 and R3. Specifically, the restraining member D restrains the pressing force amplifying mechanism 20 from generating the second pressing force when the rotational speed of the engine E falls within the range of between R1 and R3. The restraining member D starts restraining generation of the second pressing force when the rotational speed of the engine E is R1, and lifts the restraint on generation of the second pressing force when the rotational speed of the engine E is R3. Alternatively, the restraining member D may lift the restraint on generation of the second pressing force when the rotational speed is R4 at which connection of the driving clutch plates 6 and the driven clutch plates 7 starts. In FIG. 31, the rotational speed R1 of the engine E represents an idling engine speed, and the rotational speed RMAX of the engine E represents a maximum rotational speed. Connection of the driving clutch plates 6 and the driven clutch plates 7 starts when the rotational speed of the engine E is R4, and the driving clutch plates 6 and the driven clutch plates 7 are in full connection with each other when the rotational speed of the engine E is R6. The driving force of the engine E starts being transmitted to the driving wheel W when the rotational speed of the engine E is R4. The above-mentioned rotational speed ranges are not limited to those indicated by the arrows ER1 to ER4.

As illustrated in FIG. 31, the rotational speed (R7) of the engine E at which the assist cam mechanism 30 starts operating differs from the rotational speed (R5) of the engine E at which the pressing force amplifying mechanism 20 starts operating. The rotational speed (R5) of the engine E at which the pressing force amplifying mechanism 20 starts operating is lower than the rotational speed (R7) of the engine E at which the assist cam mechanism 30 starts operating. The rotational speed (R7) of the engine E at which the assist cam mechanism 30 starts operating differs from the rotational speed (R9) of the engine E at which the pressing force amplifying mechanism 20 finishes operating. The rotational speed (R7) of the engine E at which the assist cam mechanism 30 starts operating is lower than the rotational speed (R9) of the engine E at which the pressing force amplifying mechanism 20 finishes operating. The rotational speed (R7) of the engine E at which the assist cam mechanism 30 starts operating is lower than the rotational speed (R8) of the engine E at which the weight members 10 each finish moving to the outer diameter position. The rotational speed range (R7 to R10) of the engine E within which the assist cam mechanism 30 is in operation differs from the rotational speed range (R5 to R9) of the engine E within which the pressing force amplifying mechanism 20 is in operation. The rotational speed range (R7 to R10) of the engine E within which the assist cam mechanism 30 is in operation is wider than the rotational speed range (R5 to R9) of the engine E within which the pressing force amplifying mechanism 20 is in operation.

Suppose that the rotational speed of the engine E is increased such that a rotational force input to an input gear 1 and the clutch housing 2 is transmittable to the output shaft 3 through the first clutch member 204a and the second clutch member 4b (i.e., such that the weight members 10 are each located at the outer diameter position). In this case, the first pressing force is applied to the driving clutch plates 6 and the driven clutch plates 7, first sloped surfaces 4aa and second sloped surfaces 4ba slide relative to each other, and the seventh sloped surfaces 4af and the eighth sloped surfaces 5c slide relative to each other. The second clutch member 4b and the pressure member 205 thus move toward each other so as to generate the second and third pressing forces for amplifying the pressing force applied to the driving clutch plates 6 and the driven clutch plates 7. Specifically, when the rotational speed of the engine E has reached the predetermined rotational speed, the pressing force amplifying mechanism 20 and the assist cam mechanism 30 operate so as to apply the second pressing force and the third pressing force to the driving clutch plates 6 and the driven clutch plates 7. At this point, the first pressing force, the second pressing force, and the third pressing force are applied to the driving clutch plates 6 and the driven clutch plates 7. The first pressing force and the second pressing force are applied in a direction from the centrifugal clutch means 9 toward the pressure member 205 (i.e., the direction indicated by the arrow DR1 in FIG. 24). The third pressing force is applied in a direction from the pressure member 205 toward the centrifugal clutch means 9 (i.e., the direction indicated by the arrow DR2 in FIG. 24). When the rotational speed of the engine E is such that the driving force of the engine E is non-transmittable to the driving wheel W, a sum of the first pressing force and the second pressing force is greater than the third pressing force. This relationship holds true, which means that the sum of the first pressing force and the second pressing force is greater than the third pressing force in such a case, irrespective of whether or not the driving clutch plates 6 and the driven clutch plates 7 are divided into groups. This relationship holds true, for example, if the driving clutch plates 6 and the driven clutch plates 7 are divided into groups, and at least some of the driving clutch plates 6 and the driven clutch plates 7 in one group are in contact with each other but the driving clutch plates 6 and the driven clutch plates 7 in another group are out of contact with each other such that the driving force of the engine E is non-transmittable to the driving wheel W. The rotational speed of the engine E at which the driving force of the engine E is non-transmittable to the driving wheel W is a rotational speed at which the driving force of the engine E is non-transmittable to the driving wheel W, with the driving clutch plates 6 and the driven clutch plates 7 being out of contact with each other or with at least some of the driving clutch plates 6 and at least some of the driven clutch plates 7 being in contact with each other. When the weight members 10 are each located at the outer diameter position, the sum of the first pressing force and the second pressing force is equal to a sum of the third pressing force and a set load of the clutch spring S.

When rotation of the output shaft 3 is above the rotational speed of the input gear 1 and the clutch housing 2 such that a back torque is produced, third sloped surfaces 4ab and fourth sloped surfaces 4bb slide relative to each other, and the fifth sloped surfaces 4ae and the sixth sloped surfaces 5b slide relative to each other. The second clutch member 4b and the pressure member 205 thus move away from each other so as to release the pressing force (i.e., the second and third pressing forces) applied to the driving clutch plates 6 and the driven clutch plates 7. At this point, the first pressing force is being applied to the driving clutch plates 6 and the driven clutch plates 7.

As described above, the power transmission apparatus K2 according to the present embodiment includes not only the centrifugal clutch means 9 to apply the first pressing force and the pressing force amplifying mechanism 20 to generate the second pressing force, but also the assist cam mechanism 30 to generate, upon rotation of the clutch member 4 relative to the pressure member 5, the third pressing force for amplifying the pressing force applied to the driving clutch plates 6 and the driven clutch plates 7. In the above-described embodiment, not only the first pressing force and the second pressing force but also the third pressing force is applied to the driving clutch plates 6 and the driven clutch plates 7 in response to a vehicle driving condition, making it possible to maximize the pressing force applied to the driving clutch plates 6 and the driven clutch plates 7. This enables the driving force of the engine E to be more efficiently transmitted to the driving wheel W.

In the power transmission apparatus K2 according to the present embodiment, the pressing force amplifying mechanism 20 and the assist cam mechanism 30 operate so as to apply the second pressing force and the third pressing force to the driving clutch plates 6 and the driven clutch plates 7 when the rotational speed of the engine E has reached the predetermined rotational speed. The above-described embodiment makes it possible to maximize the pressing force applied to the driving clutch plates 6 and the driven clutch plates 7 when the rotational speed of the engine E has reached the predetermined rotational speed.

In the power transmission apparatus K2 according to the present embodiment, the sum of the first pressing force and the second pressing force is greater than the third pressing force when the rotational speed of the engine E is such that the driving force of the engine E is non-transmittable to the driving wheel W. The above-described embodiment would be able to start pressing the driving clutch plates 6 and the driven clutch plates 7 against each other if the rotational speed of the engine E is such that the driving force of the engine E is non-transmittable to the driving wheel W.

In the power transmission apparatus K2 according to the present embodiment, the number of amplifying cams 22 may be equal to or larger than the number of assist cams 32. The above-described embodiment allows the amplifying cams 22 to generate a sufficient level of the second pressing force.

In the power transmission apparatus K2 according to the present embodiment, the number of amplifying cams 22 may be larger than the number of assist cams 32. The above-described embodiment allows the amplifying cams 22 to generate a sufficient level of the second pressing force.

In the power transmission apparatus K2 according to the present embodiment, the direction in which the pressing force amplifying mechanism 20 applies the second pressing force to the driving clutch plates 6 and the driven clutch plates 7 and the direction in which the assist cam mechanism 30 applies the third pressing force to the driving clutch plates 6 and the driven clutch plates 7 face each other. The above-described embodiment makes it possible to press the driving clutch plates 6 and the driven clutch plates 7 against each other from both sides, enabling the driving clutch plates 6 and the driven clutch plates 7 to be pressed against each other reliably and more firmly.

In the power transmission apparatus K2 according to the present embodiment, the sum of the first pressing force and the second pressing force is equal to the sum of the third pressing force and the set load of the clutch spring S when the weight members 10 are each located at the outer diameter position. The above-described embodiment enables the driving clutch plates 6 and the driven clutch plates 7 to be pressed against each other from both sides in a balanced manner.

In the power transmission apparatus K2 according to the present embodiment, the first pressing force and the second pressing force are applied in the direction from the centrifugal clutch means 9 toward the pressure member 5, and the third pressing force is applied in the direction from the pressure member 5 toward the centrifugal clutch means 9. The above-described embodiment makes it possible to press the driving clutch plates 6 and the driven clutch plates 7 against each other from both sides, enabling the driving clutch plates 6 and the driven clutch plates 7 to be pressed against each other reliably and more firmly.

In the power transmission apparatus K2 according to the present embodiment, the rotational speed of the engine E at which the pressing force amplifying mechanism 20 starts operating may differ from the rotational speed of the engine E at which the assist cam mechanism 30 starts operating. The above-described embodiment makes it possible to apply the second pressing force and the third pressing force to the driving clutch plates 6 and the driven clutch plates 7, with the rotational speed of the engine E at optimal levels.

In the power transmission apparatus K2 according to the present embodiment, the rotational speed of the engine E at which the pressing force amplifying mechanism 20 starts operating may be lower than the rotational speed of the engine E at which the assist cam mechanism 30 starts operating. The above-described embodiment makes it possible to apply the second pressing force to the driving clutch plates 6 and the driven clutch plates 7, with the rotational speed of the engine E at optimal levels.

In the power transmission apparatus K2 according to the present embodiment, the rotational speed range of the engine E within which the pressing force amplifying mechanism 20 is in operation may differ from the rotational speed range of the engine E within which the assist cam mechanism 30 is in operation. The above-described embodiment makes it possible to apply the second pressing force and the third pressing force to the driving clutch plates 6 and the driven clutch plates 7, with the rotational speed of the engine E at optimal levels.

In the power transmission apparatus K2 according to the present embodiment, the rotational speed range of the engine E within which the assist cam mechanism 30 is in operation may be wider than the rotational speed range of the engine E within which the pressing force amplifying mechanism 20 is in operation. The above-described embodiment makes it possible to apply the third pressing force to the driving clutch plates 6 and the driven clutch plates 7, with the rotational speed of the engine E at optimal levels.

In the power transmission apparatus K2 according to the present embodiment, the rotational speed of the engine E at which the assist cam mechanism 30 starts operating differs from the rotational speed of the engine E at which the pressing force amplifying mechanism 20 finishes operating. The above-described embodiment makes it possible to apply the second pressing force and the third pressing force to the driving clutch plates 6 and the driven clutch plates 7, with the rotational speed of the engine E at optimal levels.

In the power transmission apparatus K2 according to the present embodiment, the rotational speed of the engine E at which the assist cam mechanism 30 starts operating is lower than the rotational speed of the driving source at which the pressing force amplifying mechanism 20 finishes operating. The above-described embodiment makes it possible to apply the third pressing force to the driving clutch plates 6 and the driven clutch plates 7, with the rotational speed of the engine E at optimal levels.

In the power transmission apparatus K2 according to the present embodiment, the rotational speed of the engine E at which the assist cam mechanism 30 starts operating is lower than the rotational speed of the engine E at which the weight members 10 each finish moving to the outer diameter position. The above-described embodiment makes it possible to apply the third pressing force to the driving clutch plates 6 and the driven clutch plates 7, with the rotational speed of the engine E at optimal levels.

### Third Embodiment

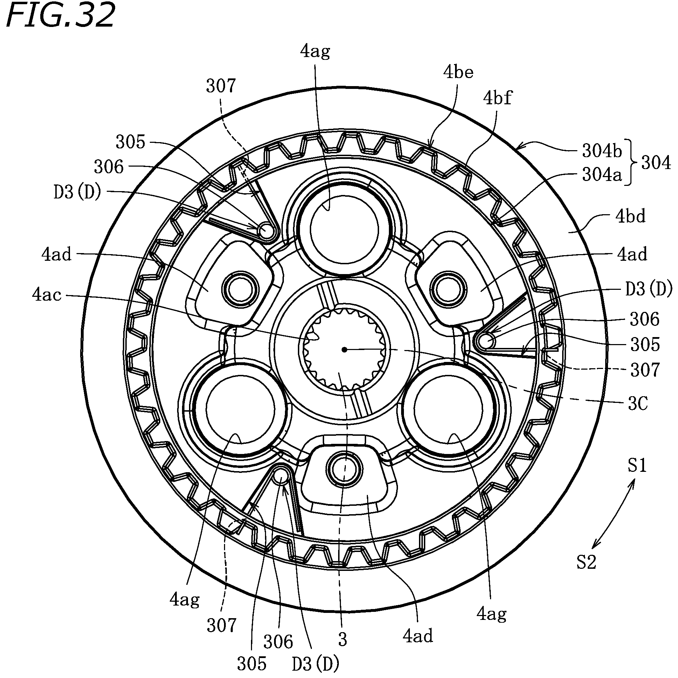

FIG. 32 is a plan view of a clutch member 304 according to a third embodiment. As illustrated in FIG. 32, the clutch member 304 includes a first clutch member 304a, a second clutch member 304b, and torsion springs D3. The first clutch member 304a is fitted to the second clutch member 304b. The torsion springs D3 are each an example of a restraining member D. In the third embodiment, stepped portions D1 are each another example of the restraining member.

As illustrated in FIG. 32, the first clutch member 304a includes: housing portions 305 in which the torsion springs D3 are housed; and holders 306 provided in the housing portions 305 and holding the torsion springs D3. The holders 306 each have a circular cylindrical shape and extend in an axial direction of an output shaft 3.

As illustrated in FIG. 32, the torsion springs D3 are housed in the housing portions 305 defined in the first clutch member 304a. The torsion springs D3 are assembled to the first clutch member 304a such that ends of the torsion springs D3 are allowed to abut against side walls of the housing portions 305. The other ends of the torsion springs D3 are inserted into insertion holes 307 defined in the second clutch member 304b and are in abutment with an outer peripheral wall 4be. The torsion springs D3 urge a portion of the clutch member (i.e., the second clutch member 304b in this case) in a second circumferential direction S2 opposite to a first circumferential direction S1. The torsion springs D3 are disposed between the first clutch member 304a and the second clutch member 304b. The torsion springs D3 are each disposed radially outward of the output shaft 3 and radially inward of an outer peripheral edge 4bf of the outer peripheral wall 4be of the second clutch member 304b in a radial direction perpendicular to the axial direction of the output shaft 3. The torsion springs D3 are disposed between adjacent ones of through holes 4ag in a circumferential direction. When a rotary torque applied to the second clutch member 304b in the first circumferential direction S1 owing to a first pressing force is equal to or less than an urging force of the torsion springs D3, first sloped surfaces 4aa and second sloped surfaces 4ba are restrained from sliding relative to each other. In other words, the torsion springs D3 restrain a pressing force amplifying mechanism 20 from generating a second pressing force. The rotary torque that has increased to be greater than the urging force of the torsion springs D3 results in lifting of the restraint on sliding of the first sloped surfaces 4aa and the second sloped surfaces 4ba relative to each other. In other words, the torsion springs D3 allow the pressing force amplifying mechanism 20 to generate the second pressing force.

The preferred embodiments of the present invention have been described thus far. The foregoing embodiments, however, are only illustrative. The present invention may be embodied in various other forms.

Each of the foregoing embodiments involves using the engine E as the driving source. The driving source, however, is not limited to the engine E. The driving source may be, for example, an electric motor.

In each of the foregoing embodiments, the first clutch member 4a includes the recesses A, and the second clutch member 4b includes the protrusions T. The present invention, however, is not limited to this arrangement. In one example, the first clutch member 4a may include the protrusions T, and the second clutch member 4b may include the recesses A.

In each of the foregoing embodiments, the clutch member 4 is disposed between the centrifugal clutch means 9 including the weight members 10 and the pressure member 5 in the axial direction of the output shaft 3, and the weight members 10 each urge the clutch member 4 (i.e., the second clutch member 4b in this case) in the direction toward the pressure member 5 (e.g., the direction indicated by the arrow DR2 in FIG. 2) upon moving from the inner diameter position to the outer diameter position. The present invention, however, is not limited to this arrangement. In one example, the pressure member 5 may be disposed between the centrifugal clutch means 9 including the weight members 10 and the clutch member 4 in the axial direction of the output shaft 3, and the weight members 10 may each urge the pressure member 5 in the direction toward the clutch member 4 upon moving from the inner diameter position to the outer diameter position.

In the first embodiment described above, the restraining member D includes the stepped portions D1 and the coil springs D2. The restraining member D that includes either the stepped portions D1 or the coil springs D2, however, is also able to restrain the pressing force amplifying mechanism 20 from generating the second pressing force.

In the third embodiment described above, the restraining member D includes the stepped portions D1 and the torsion springs D3. The restraining member D that includes either the stepped portions D1 or the torsion springs D3, however, is also able to restrain the pressing force amplifying mechanism 20 from generating the second pressing force.

The power transmission apparatuses according to the present invention may be used as multi-disc clutch type power transmission apparatuses for various vehicles, such as motorcycles, automobiles, three-wheel or four-wheel buggies, and general-purpose machines.

### REFERENCE SIGNS LIST

- 1: input gear (input member)
- 2: clutch housing
- 3: output shaft (output member)
- 4: clutch member
- 4a: first clutch member
- 4aa: first sloped surface
- 4ab: third sloped surface
- 4ae: fifth sloped surface
- 4af: seventh sloped surface
- 4ag: through hole
- 4b: second clutch member
- 4ba: second sloped surface
- 4bb: fourth sloped surface
- 4bc: spline-fitting portion
- 4bd: flange
- 4be: outer peripheral wall
- 5: pressure member
- 5a: flange
- 5b: sixth sloped surface
- 5c: eighth sloped surface
- 5e: fitting teeth
- 6: driving clutch plate
- 7: driven clutch plate
- 9: centrifugal clutch means
- 10: weight member
- 10a: inclined surface
- 13: pushed member
- 13a: inclined surface
- 18: pushing cam (second cam)
- 20: pressing force amplifying mechanism
- 22: amplifying cam (first cam)
- 30: assist cam mechanism
- 32: assist cam
- A: recess
- D: restraining member
- D1: stepped portion (restraining member)
- D2: coil spring (restraining member)
- D3: torsion spring (restraining member)
- E: engine
- K: power transmission apparatus
- S: clutch spring
- T: protrusion
- Ta: housing recess
- W: driving wheel

## Claims

1. A power transmission apparatus comprising:
a clutch member housed in a clutch housing that rotates together with an input member to be rotated with a driving force of a driving source and that holds driving clutch plates, the clutch member being connected to an output member that is able to rotate a wheel, the clutch member holding driven clutch plates disposed alternately with the driving clutch plates;
a pressure member that is able to push the driving clutch plates and the driven clutch plates together with the clutch member;
a centrifugal clutch means including a weight member movable from an inner diameter position to an outer diameter position with centrifugal force resulting from rotation of the clutch housing, the centrifugal clutch means applying a first pressing force to the driving clutch plates and the driven clutch plates upon movement of the weight member from the inner diameter position to the outer diameter position, the centrifugal clutch means pressing the driving clutch plates and the driven clutch plates against each other such that the driving force of the driving source is transmittable to the wheel when the weight member is located at the outer diameter position, the centrifugal clutch means releasing the first pressing force applied to the driving clutch plates and the driven clutch plates so as to be able to cut off transmission of the driving force of the driving source to the wheel when the weight member is located at the inner diameter position;
a pressing force amplifying mechanism to generate, upon an increase in rotational speed of the driving source, a second pressing force for amplifying the pressing force applied to the driving clutch plates and the driven clutch plates; and
an assist cam mechanism to generate, upon rotation of the clutch member relative to the pressure member, a third pressing force for amplifying the pressing force applied to the driving clutch plates and the driven clutch plates.

2. The power transmission apparatus according to claim 1, wherein
when the rotational speed of the driving source has reached a predetermined rotational speed, the pressing force amplifying mechanism and the assist cam mechanism operate so as to apply the second pressing force and the third pressing force to the driving clutch plates and the driven clutch plates.

3. The power transmission apparatus according to claim 1 or 2, wherein
when the rotational speed of the driving source is such that the driving force of the driving source is non-transmittable to the wheel, a sum of the first pressing force and the second pressing force is greater than the third pressing force.

4. The power transmission apparatus according to claim 1, wherein
the pressing force amplifying mechanism includes amplifying cams to generate the second pressing force,
the assist cam mechanism includes assist cams to generate the third pressing force, and
the number of amplifying cams is equal to or larger than the number of assist cams.

5. The power transmission apparatus according to claim 4, wherein
the number of amplifying cams is larger than the number of assist cams.

6. The power transmission apparatus according to claim 1, wherein
a direction in which the pressing force amplifying mechanism applies the second pressing force to the driving clutch plates and the driven clutch plates and a direction in which the assist cam mechanism applies the third pressing force to the driving clutch plates and the driven clutch plates face each other.

7. The power transmission apparatus according to claim 6, comprising a clutch spring to urge the pressure member in a direction toward the clutch member, wherein
a sum of the first pressing force and the second pressing force is equal to a sum of the third pressing force and a set load of the clutch spring when the weight member is located at the outer diameter position.

8. The power transmission apparatus according to claim 6 or 7, wherein
the centrifugal clutch means is disposed opposite to the pressure member, with the driving clutch plates and the driven clutch plates located therebetween,
the first pressing force and the second pressing force are applied in a direction from the centrifugal clutch means toward the pressure member, and
the third pressing force is applied in a direction from the pressure member toward the centrifugal clutch means.

9. The power transmission apparatus according to claim 1, wherein
a rotational speed of the driving source at which the pressing force amplifying mechanism starts operating differs from a rotational speed of the driving source at which the assist cam mechanism starts operating.

10. The power transmission apparatus according to claim 9, wherein
the rotational speed of the driving source at which the pressing force amplifying mechanism starts operating is lower than the rotational speed of the driving source at which the assist cam mechanism starts operating.

11. The power transmission apparatus according to claim 1, wherein
a rotational speed range of the driving source within which the pressing force amplifying mechanism is in operation differs from a rotational speed range of the driving source within which the assist cam mechanism is in operation.

12. The power transmission apparatus according to claim 11, wherein
the rotational speed range of the driving source within which the assist cam mechanism is in operation is wider than the rotational speed range of the driving source within which the pressing force amplifying mechanism is in operation.

13. The power transmission apparatus according to claim 1, wherein
a rotational speed of the driving source at which the assist cam mechanism starts operating differs from a rotational speed of the driving source at which the pressing force amplifying mechanism finishes operating.

14. The power transmission apparatus according to claim 13, wherein
the rotational speed of the driving source at which the assist cam mechanism starts operating is lower than the rotational speed of the driving source at which the pressing force amplifying mechanism finishes operating.

15. The power transmission apparatus according to claim 13, wherein
the rotational speed of the driving source at which the assist cam mechanism starts operating is lower than a rotational speed of the driving source at which the weight member finishes moving to the outer diameter position.
